# EUROPÄISCHE PATENTSCHRIFT

(11) **EP 4 293 875 B1**
(45) Veröffentlichungstag und Bekanntmachung des Hinweises auf die Patenterteilung: **03.06.2026**
(21) Anmeldenummer: 22179240.1
(22) Anmeldetag: 15.06.2022
(51) Int. Cl.: H02K 3/34, H02K 3/52, H02K 5/22, H02K 11/25, H02K 15/12

(54) **ELEKTROMOTOR, KÜCHENMASCHINE UND MONTAGEVERFAHREN**
ELECTRIC MOTOR, FOOD PROCESSOR AND ASSEMBLY METHOD
MOTEUR ÉLECTRIQUE, ROBOT DE CUISINE ET PROCÉDÉ DE MONTAGE

(43) Veröffentlichungstag der Anmeldung: 20.12.2023
(73) Patentinhaber: Vorwerk & Co. Interholding GmbH, 42275 Wuppertal (DE)
(72) Erfinder: Schmidt, Dirk, 51688 Wipperfürth (DE); Busse, Kevin, 42859 Remscheid (DE); Rebentisch, Mirko, 42289 Wuppertal (DE); Reiners, Jörg, 42119 Wuppertal (DE); Scheuch, Andreas, 58636 Iserlohn (DE)
(74) Vertreter: Von Rohr Patentanwälte Partnerschaft mbB

(56) Entgegenhaltungen:
- EP-A1- 1 557 928
- WO-A1-2017/076461
- DE-A1- 102010 039 334
- DE-A1- 102012 206 475
- DE-A1- 102020 120 233
- US-A1- 2013 221 787
- US-A1- 2014 103 768
- US-A1- 2020 251 942

## Beschreibung

Die vorliegende Erfindung betrifft einen Elektromotor, insbesondere für eine Küchenmaschine, eine Küchenmaschine mit einem Elektromotor sowie ein Verfahren zur Montage eines Elektromotors.

Elektromotoren, beispielsweise in Form von bürstenlosen Gleichstrommotoren, sind aus dem Stand der Technik bekannt und weisen einen Ständer/Stator und einen relativ zum Stator rotierenden Läufer/Rotor auf. Bei bürstenlosen Gleichstrommotoren ist der Stator mit Statorspulen und der Rotor mit Permanentmagneten bestückt.

Die Permanentmagneten können hierbei außen am Rotorkern (SPM - Surface Permanent Magnet) oder im Rotorkern vorgesehen bzw. eingebettet sein (IPM - Interior Permanent Magnet).

Üblicherweise werden die Permanentmagneten mit dem Rotorkern verklebt, um sie zu fixieren. Hierbei stellt sich jedoch das Problem, dass die Permanentmagnete in Position gehalten bzw. vorfixiert werden müssen, bis der Klebstoff ausgehärtet ist.

Eine aus dem Stand der Technik bekannte Lösung ist das Vorsehen von Laschen am Rotorkern. Der Rotorkern ist aus übereinanderliegenden Elektroblechen aufgebaut, wobei an einem oder mehreren der Elektrobleche Blechlaschen angeformt sind, mit denen der jeweilige Permanentmagnet in Position gehalten wird.

Der Blechschnitt des Rotorkerns wird hierdurch jedoch aufwendiger, da die Laschengeometrie im Normalfall nicht in jedem Blech vorhanden sein soll, entsprechend also mindestens eine Blechlage mit den Laschen hinzukommt. Da die Blechlagen mit einem Stanzwerkzeug gestanzt werden, die Anzahl verschiedener Blechgeometrien bei einem solchen Werkzeug jedoch begrenzt ist, kann die zusätzliche Blechlage gegebenenfalls auch gar nicht im Werkzeug erzeugt werden.

Eine weitere aus dem Stand der Technik bekannte Lösung sieht zusätzliche Bauteile vor, welche nur der Fixierung der Permanentmagnete dienen. Hierbei sind Lösungen möglich, bei denen das jeweilige Bauteil den jeweiligen Permanentmagneten vollständig fixiert - also ohne die Verwendung von Klebstoff - oder nur eine Vorfixierung des jeweiligen Permanentmagneten ermöglicht und nach dem Aushärten des Klebstoffs wieder entfernt wird. Die Verwendung zusätzlicher Bauteile macht den Aufbau bzw. die Herstellung des Elektromotors jedoch komplexer bzw. aufwendiger.

Die Verwendung von mehreren, zusätzlichen Bauteilen ist beispielsweise aus der DE 10 2014 117 380 A1 bekannt. Diese betrifft einen Permanentmagnetläufer für einen bürstenlosen Motor des Innenpermanentmagnet-(IPM)-Typs. Zum Sichern der Permanentmagneten im Läuferkern sind eine Vielzahl von Federn vorgesehen, die im zusammengedrückten Zustand zwischen den inneren radialen Enden des jeweiligen Permanentmagnets und einem inneren ringförmigen Bereich des Läufers angeordnet sind. Mit Verwendung der Federn kann auf Klebstoff zum Sichern der Permanentmagnete verzichtet werden.

Die EP 1 557 928 A1 betrifft eine elektrische Maschine mit einem Rotor und ein Verfahren zur Kühlung dieser elektrischen Maschine. Der Rotor weist Rotorsegmente mit dazwischen gebildeten Aufnahmespalten zur Aufnahme von Permanentmagneten auf. Ferner weist der Rotor eine Rotorabdeckung mit im Querschnitt dreieckigen Klemmelementen auf, die in die jeweiligen Aufnahmespalte geschoben und elastisch verformt sind, um die Permanentmagnete sicher zu fixieren. Ferner weist der Rotor einen Durchlüftungskanal und die Rotorabdeckung ein zugeordnetes Luftleitelement zur Erzeugung eines Luftstroms durch den Durchlüftungskanal bei rotierendem Rotor auf.

Die US 2013/0221787 A1 betrifft einen Rotor mit einem Federelement zur mechanischen Fixierung von Magneten im Rotor. Das Federelement umfasst einen Haltering mit davon axial abstehenden Fixiermitteln. Das Federelement wird so im Rotor angeordnet, dass die Fixiermittel jeweils einen Permanentmagneten in radialer Richtung nach außen gegen Stege des Rotors drücken und festklemmen.

Die DE 10 2010 039 334 A1 betrifft die Befestigung von Magneten an einem Rotor. Hierzu sind zwei Axialfixierungsmittel vorgesehen, die jeweils an den axialen Enden des Rotors angeordnet sind und als Haltescheiben ausgebildet sind, um die Dauermagnete axial zu fixieren. Die Axialfixierungsmittel weisen ferner Fixierungsmittel auf, um die Dauermagnete auch radial zu fixieren.

Die DE 10 2012 206 475 A1 betrifft ein Formteil zur Vorfixierung eines Dauermagneten in einem Rotor oder Stator, zur Fixierung des Dauermagneten mittels eines aushärtbaren Mediums und zum thermischen Schutz des Dauermagneten während der Fixierung. Der Rotor weist einen Grundkörper mit einer Vielzahl von speichenartig angeordneten Aussparungen für die Dauermagnete auf. Das Formteil ist zum Vorpositionieren der Dauermagnete in den Aussparungen vorgesehen und weist eine Stirnplatte und davon abragende Haltestränge auf. Im Bereich der Stirnplatte sind die Haltestränge so ausgebildet, dass sie die Aussparung für ein aushärtendes Medium dichtend verschließen, also einen Dichtbereich bilden.

Die US 2014/0103768 A1 betrifft einen Rotor mit radial eingebetteten Permanentmagneten. Der Rotor umfasst Vorsprünge, die sich in Ausnehmungen für die Permanentmagnete erstrecken, um den Permanentmagneten in der Ausnehmung festzulegen.

Die DE 10 2020 120 233 A1 betrifft ein Motorbauteil für einen Elektromotor, wobei das Motorbauteil einen Blechstapel mit Ausnehmungen für weitere Bauteile, beispielsweise Magnete, umfasst. Die Bleche weisen Vorsprünge auf, die in die Ausnehmungen hineinragen und beim Einführen der weiteren Bauteile umgebogen bzw. federelastisch verformt werden, um die Bauteile sicher in den Ausnehmungen zu halten. Die Bauteile werden ferner in den Ausnehmungen verklebt.

Die WO 2017/076461 A1 betrifft einen Magnethalter zur Verwendung in einem Elektromotor mit einem Rotor, der eine Vielzahl von Schlitzen zur Aufnahme von Permanentmagneten aufweist. Der Magnethalter hat einen ringförmigen Grundkörper und mehrere äußere Schenkel, die jeweils in die Schlitze einsetzbar sind und in Einbuchtungen der jeweiligen Permanentmagneten eingreifen, um eine formschlüssige Verbindung zu bilden.

Die US 2020/0251942 A1 betrifft einen Rotor mit einer Welle und einem Rotorkörper, wobei der Rotorkörper eine Vielzahl von Permanentmagneten, einen Rotorkern, ein Spritzgussteil zum Tragen der Permanentmagneten sowie eine mit dem Spritzgussteil verrastbare Abdeckung aufweist.

Der vorliegenden Erfindung liegt die Aufgabe zugrunde, einen Elektromotor, eine Küchenmaschine mit einem Elektromotor und ein Montageverfahren für einen Elektromotor anzugeben, wobei der Elektromotor eine einfache, kompakte und/oder kostengünstige Konstruktion aufweist bzw. eine einfache, schnelle und/oder kostengünstige Montage/Herstellung ermöglicht und/oder wobei eine sichere und zuverlässige Positionierung bzw. (Vor-)Fixierung der Permanentmagneten am Rotor bzw. Rotorkern sichergestellt wird.

Die der Erfindung zugrundeliegende Aufgabe wird durch einen Elektromotor gemäß Anspruch 1, eine Küchenmaschine gemäß Anspruch 12 oder ein Verfahren gemäß Anspruch 13 gelöst. Vorteilhafte Weiterbildungen sind Gegenstand der Unteransprüche.

Der vorschlagsgemäße Elektromotor weist einen (feststehenden) Stator und einen relativ zum Stator um eine Rotationsachse drehbaren Rotor auf.

Der Rotor weist einen Rotorkörper/Rotorkern auf, der insbesondere durch übereinander gestapelte Rotorbleche bzw. Elektrobleche gebildet ist. Bei dem Rotorkern handelt es sich also vorzugsweise um ein Blechpaket bzw. Rotorpaket.

Der Rotor weist eine Vielzahl von Permanentmagneten auf, die im Rotorkern vorgesehen bzw. eingebettet sind. Hierzu weist der Rotorkern entsprechende Magnetaufnahmen auf bzw. sind entsprechende Magnetaufnahmen im Rotorkern gebildet, wobei die Magnetaufnahmen radial nach außen jeweils durch einen (radialen) Anschlag begrenzt sind.

Die räumlichen Zuordnungen, Anordnungen und/oder Ausrichtungen, insbesondere die im Rahmen der vorliegenden Erfindung verwendeten Begriffe "radial", "axial" und/oder "in Umfangsrichtung", beziehen sich - sofern nicht anders angegeben - insbesondere auf die Rotationsachse des Rotors bzw. eine Rotorwelle des Rotors.

Vorschlagsgemäß weist der Rotor eine Montageeinrichtung zur Montage der Permanentmagneten auf.

Die Montageeinrichtung hat einen Grundkörper und (zumindest teilweise) nachgiebige/flexible/elastische Fixierelemente, die der (Vor-)Fixierung der Permanentmagnete dienen. Die Fixierelemente ragen vom Grundkörper in axialer Richtung in die Magnetaufnahmen bzw. greifen in axialer Richtung in die Magnetaufnahmen ein und drücken bzw. klemmen die Permanentmagnete in radialer Richtung gegen die jeweiligen (radial außen liegenden) Anschläge.

Vorzugsweise ist jeder Magnetaufnahme bzw. jedem Permanentmagneten (genau) ein Fixierelement zugeordnet.

In vorteilhafter Weise werden die Permanentmagnete durch die Fixierelemente in die gewünschte Position bzw. Endposition geschoben bzw. gedrückt und/oder dort in Position gehalten bzw. fixiert. Durch die Fixierelemente wird somit eine sichere und zuverlässige Positionierung bzw. (Vor-)Fixierung der Permanentmagnete sowie eine einfache und schnelle Montage bzw. Herstellung erzielt.

Besonders bevorzugt sind die Fixierelemente einstückig mit dem Grundkörper ausgebildet. So wird lediglich ein Bauteil benötigt, um sämtliche Permanentmagneten zu positionieren bzw. fixieren. Dies ist einem einfachen, kompakten und kostengünstigen Aufbau des Elektromotors bzw. Rotors zuträglich und vereinfacht zudem die Montage bzw. Herstellung.

Die Permanentmagneten sind (zusätzlich) mit dem Rotorkern und/oder der Montageeinrichtung verklebt. Die Fixierelemente dienen insbesondere der Positionierung bzw. Vorfixierung der Permanentmagnete, während der Klebstoff aushärtet. Hierdurch wird eine besonders stabile bzw. sichere Fixierung der Permanentmagnete erzielt. Zudem kann auf im Stand der Technik notwendige zusätzliche Vorrichtungen, die die Permanentmagnete während des Aushärtens des Klebstoff in Position halten, ebenfalls verzichtet werden.

Die Fixierelemente sind vorzugsweise länglich bzw. armartig bzw. rippenartig ausgebildet.

Vorzugsweise weisen die Fixierelemente jeweils ein erstes axiales Ende bzw. einen Verbindungsarm auf, wobei das erste axiale Ende bzw. der Verbindungsarm des Fixierelements (biegbar) mit dem Grundkörper der Montageeinrichtung verbunden ist. Vorzugsweise weisen die Fixierungselemente jeweils ein zweites axiales bzw. freies Ende bzw. einen Kopf auf, wobei das freie Ende bzw, der Kopf gegen den Permanentmagneten drückt bzw. daran anliegt. Hierdurch wird in besonders einfacher Weise ein flexibles Fixierelement gebildet.

Besonders bevorzugt ragt das jeweilige Fixierelement zumindest im Wesentlichen bis zur Hälfte der axialen Erstreckung der jeweiligen Magnetaufnahme in diese und/oder drückt das jeweilge Fixierelement - insbesondere mit seinem Kopf - zumindest im Wesentlichen mittig auf eine Seite des Permanentmagneten, insbesondere die radial nach innen gewandte (Stirn-)Seite. Hierdurch wird eine besonders gleichmäßige Krafteinwirkung auf den Permanentmagneten erzielt.

Die radialen Anschläge sind vorzugsweise vom Rotorkern, insbesondere einem oder mehreren Rotorblechen des Rotorkerns, gebildet. Dies ist einem einfachen und kompakten Aufbau zuträglich.

Die Anschläge können als Stege ausgebildet sein, insbesondere wenn sie nur von einzelnen Rotorblechen gebildet werden.

Vorzugsweise sind die Anschläge oder Stege radial nach innen bzw. in die jeweilige Magnetaufnahme gebogen/gewölbt. Hierdurch kann sichergestellt werden, dass sich auch bei einer Verbiegung des Anschlags/Stegs der Durchmesser des Rotors nicht ändert. Eine solche Verbiegung kann aufgrund der Krafteinwirkung des Permanentmagneten beim Drücken des Permanentmagneten gegen den Anschlag auftreten. Vorzugsweise sind die Anschläge also zum Ausgleich bzw. zur Kompensation von Radialkräften ausgebildet.

Die Anschläge weisen vorzugweise jeweils Nasen auf, die in radialer Richtung in die Magnetaufnahmen ragen bzw. in Richtung der Rotationsachse zeigen. Die Nasen bilden eine vorzugsweise im Wesentlichen punktförmige Anlagefläche für den jeweiligen Permanentmagneten.

Die Montageeinrichtung begrenzt die Magnetaufnahmen axial und weist ein oder mehrere Reservoirs bzw. Aufnahmekammern auf, die der Aufnahme von (überdosiertem bzw. überschüssigem) Klebstoff dienen.

In vorteilhafter Weise wird so aus Toleranzgründen zu viel dosierter Klebstoff in der bzw. den Aufnahmekammern gesammelt, sodass der überschüssige Klebstoff nicht entfernt werden muss bzw. die Produktionsanlagen nicht verschmutzen kann. Dies ist einer einfachen und kostengünstigen Montage bzw. Herstellung zuträglich. Zudem kann auch eine stabile und sichere Fixierung der Permanentmagneten gewährleistet werden, da der Klebstoff problemlos (leicht) überdosiert werden kann, so dass eine feste Verklebung sichergestellt ist. Ferner wird ein besonders einfacher und kompakter Aufbau realisiert.

Es kann eine gemeinsame Aufnahmekammer für mehrere oder alle Magnetaufnahmen bzw. Permanentmagneten vorgesehen sein. Alternativ und bevorzugt sind jeder Magnetaufnahme bzw. jedem Permanentmagneten eine (eigene) oder mehrere (eigene) Aufnahmekammern zugeordnet.

Die Montageeinrichtung begrenzt die Magnetaufnahmen axial, insbesondere bodenseitig bzw. von unten, und bildet jeweils einen axialen Anschlag bzw. Gegenlager für die Permanentmagneten. Hierzu weist die Montageeinrichtung bevorzugt ein oder mehrere, vorzugsweise rippenartige, Anlage- bzw. Anschlagelemente auf.

Insbesondere können die Permanentmagneten bei der Montage von oben bzw. an der der Montageeinrichtung gegenüberliegenden axialen Seite der Magnetaufnahme eingeführt bzw. eingeschoben werden, bis sie gegen die Montageeinrichtung, insbesondere das/die Anschlagelement(e), schlagen bzw. dort zur Anlage kommen. Dies ist einer einfachen und sicheren Montage sowie einem einfachen Aufbau des Elektromotors bzw. Rotors zuträglich.

Die verwendeten Begriffe "oben", "unten" und dergleichen beziehen sich - sofern nicht anders angegeben - insbesondere auf die bevorzugte Ausrichtung des Elektromotors bzw. Rotors während der Montage der Permanentmagnete, bei der die Montageeinrichtung axial unterhalb des Rotorkerns angeordnet ist. Die Montage und/oder der Einbau des Elektromotors in eine Küchenmaschine oder eine andere Vorrichtung kann jedoch auch in einer anderen Ausrichtung erfolgen.

Bevorzugt wird/werden die Aufnahmekammer(n) von dem/den Anschlagelementen seitlich begrenzt. Hierdurch werden die Aufnahmekammern in einfacher Weise realisiert bzw. im Bereich der Magnetaufnahme und/oder direkt unterhalb des Permanentmagneten ausgebildet. Dies stellt sicher, dass der überdosierte Klebstoff in der Aufnahmekammer verbleibt.

Die Montageeinrichtung ist vorzugsweise spritzgegossen und/oder einstückig ausgebildet, insbesondere mit den Fixierelementen und/oder Aufnahmekammern. Dies ist einer besonders einfachen bzw. kostengünstigen Herstellung mit wenigen Bauteilen zuträglich.

Vorzugsweise sind/ist der Rotorkern und/oder die Montageeinrichtung mit einer Welle des Rotors kraft-, form und/oder stoffschlüssig verbunden, beispielsweise mithilfe von Einkerbungen oder mittels einer Presspassung. Durch die Verklebung ist die Montageeinrichtung bevorzugt zusätzlich mit dem Rotorkern und/oder den Permanentmagneten (direkt) verbunden.

Zusätzlich oder alternativ kann die Montageeinrichtung Befestigungselemente aufweisen, die die Montageeinrichtung (direkt) am Rotorkern befestigen - insbesondere bereits vor der Verklebung bzw. zusätzlich zu der Verklebung.

Die Befestigungselemente sind vorzugsweise stiftartig ausgebildet und/oder ragen axial in den Rotorkern hinein oder durch den Rotorkern hindurch. Besonders bevorzugt sind die Befestigungselemente mit dem Rotorkern heißverstemmt und/oder bilden die Befestigungselemente mit dem Rotorkern eine Schnappverbindung.

Durch die Befestigungselemente wird ein besonders stabiler und kompakter Aufbau des Rotors ermöglicht.

Die Befestigungselemente an der Montageeinrichtung bzw. die Verbindung von Montageeinrichtung und Rotorkern mittels der Befestigungselemente können/kann auch unabhängig von der Fixierung der Permanentmagnete und/oder der Ausbildung von Klebstoff-Aufnahmekammern realisiert sein.

Vorzugsweise weist der Rotor ein Gebläse bzw. einen Lüfter zur Kühlung des Elektromotors auf, wobei das Gebläse bzw. der Lüfter die Montageeinrichtung aufweist oder bildet.

Durch den Lüfter sind bzw. werden also, zusätzlich zum Belüften, Zusatzfunktionen - wie das vorschlagsgemäße Positionieren bzw. Fixieren der Permanentmagnete und/oder das Bereitstellen von Aufnahmekammern für Klebstoff - realisiert.

In vorteilhafter Weise werden somit die Mittel zur Montage der Permanentmagneten, insbesondere zur Positionierung bzw. Fixierung, insbesondere die Fixierelemente und/oder Aufnahmekammern, an einem bereits für andere Zwecke verwendeten Bauteil ausgebildet bzw. dort integriert. Auf zusätzliche Bauteile zur Montage kann somit vollständig verzichtet werden. Dies ist einem einfachen, kompakten und kostengünstigen Aufbau des Elektromotors bzw. Rotors zuträglich und vereinfacht zudem die Montage bzw. Herstellung.

Ein weiterer, auch unabhängig realisierbarer Aspekt der vorliegenden Erfindung betrifft eine Küchenmaschine mit einem vorschlagsgemäßen Elektromotor.

Die vorschlagsgemäße Küchenmaschine wird von dem Elektromotor angetrieben, insbesondere zum Zerkleinern und/oder Rühren bzw. Mischen von Lebensmitteln. Besonders bevorzugt weist die Küchenmaschine einen Rührer, ein Schneide o. dgl. auf, der/die von dem Elektromotor in Rotation versetzt werden kann.

Durch die Verwendung des vorschlagsgemäßen Elektromotors in einer Küchenmaschine können entsprechende Vorteile erzielt werden. Insbesondere kann der vorschlagsgemäße Elektromotor aufgrund seiner kompakten, flachen bzw. einfachen Bauweise besonders platzsparend in der Küchenmaschine angeordnet werden. Grundsätzlich kann der Elektromotor jedoch auch in anderen Vorrichtungen verwendet werden, beispielsweise einem Staubsauger oder Saugroboter.

Ein weiterer, auch unabhängig realisierbarer Aspekt der vorliegenden Erfindung betrifft ein Verfahren zur Montage eines Elektromotors bzw. eines Rotors für einen Elektromotor, bei dem ein Permanentmagnet in eine im Rotorkern vorgesehene Magnetaufnahme eingesetzt bzw. geschoben und damit verklebt wird. Vorschlagsgemäß wird eine Montageeinrichtung des Rotors beim Verkleben verwendet.

Bei dem vorschlagsgemäßen Verfahren hat die Montageeinrichtung ein axial in die Magnetaufnahme ragendes, flexibles Fixierelement. Wenn der Permanentmagnet in die Magnetaufnahme eingesetzt wird, drückt bzw. klemmt das Fixierelement den Permanentmagneten in radialer Richtung gegen einen Anschlag, der die Magnetaufnahme radial begrenzt. Hierdurch wird der Permanentmagnet positioniert und/oder während des Aushärtens des Klebstoffs fixiert.

Zusätzlich zu dem Fixierelement weist die Montageeinrichtung bei dem vorschlagsgemäßen Verfahren eine Aufnahmekammer auf, wobei bei der Montage des Permanentmagneten (überdosierter) Klebstoff in der Aufnahmekammer aufgenommen bzw. vom Permanentmagneten in die Aufnahmekammer eingetragen wird.

Durch das vorschlagsgemäße Verfahren können entsprechende Vorteile erzielt werden. Insbesondere kann mittels des vorschlagsgemäßen Verfahrens der zuvor beschriebene Elektromotor bzw. dessen Rotor zusammengebaut bzw. hergestellt werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine perspektivische Ansicht eines vorschlagsgemäßen Elektromotors mit einem Stator und einem vorschlagsgemäßen Rotor;
- Fig. 2: eine Explosionsdarstellung des Stators gemäß Fig. 1;
- Fig. 3: eine perspektivische Ansicht des Rotors gemäß Fig. 1;
- Fig. 4: eine Explosionsdarstellung des Rotors gemäß Fig. 3;
- Fig. 5: eine Draufsicht des Rotors gemäß Fig. 3 mit einem vergrößerten Ausschnitt im Bereich eines Anschlags;
- Fig. 6: einen Schnitt des Rotors gemäß Fig. 3 entlang seiner Rotationsachse im Bereich eines Permanentmagnets des Rotors;
- Fig. 7: einen zu Fig. 6 korrespondierenden Schnitt des Rotors beim Einsetzen eines Permanentmagneten während der Montage;
- Fig. 8: einen zu Fig. 6 korrespondierenden Schnitt des vorschlagsgemäßen Rotors gemäß einer zweiten Ausführungsform;
- Fig. 9: einen Schnitt des vorschlagsgemäßen Rotors gemäß einer dritten Ausführungsform entlang seiner Rotationsachse im Bereich eines Abschnitts des Rotorkerns; und
- Fig. 10: eine Seitenansicht einer vorschlagsgemäßen Küchenmaschine.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

Zur besseren Übersichtlichkeit sind bei gleichen Bauteilen und Komponenten innerhalb einer Figur nicht alle Bauteile/Komponenten mit einem Bezugszeichen versehen.

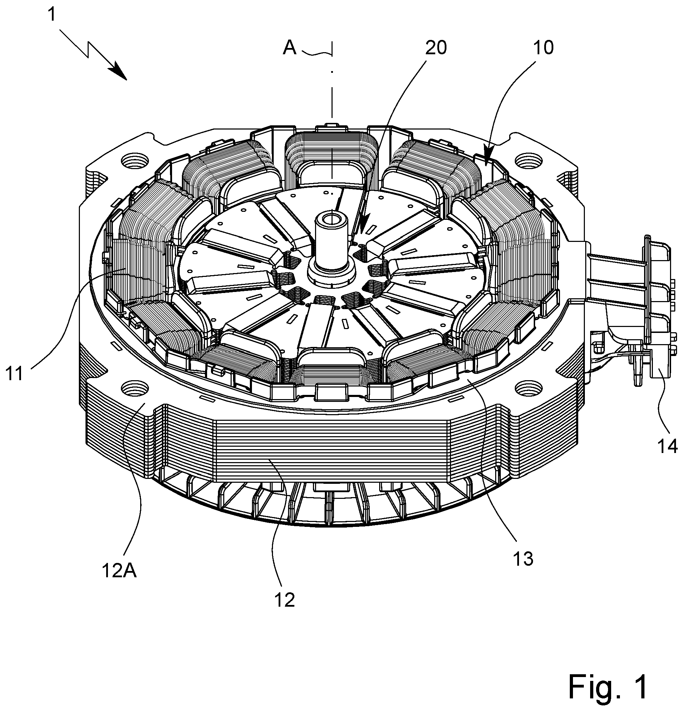

Fig. 1 zeigt einen vorschlagsgemäßen Elektromotor 1 in einer schematischen, perspektivischen Darstellung.

Bei der dargestellten Ausführungsform ist der Elektromotor 1 als bürstenloser Gleichstrommotor ausgebildet. Es sind jedoch grundsätzlich auch andere Lösungen möglich.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Optional kann der Elektromotor 1 ein Gehäuse aufweisen bzw. können Stator 10 und/oder Rotor 20 in einem Gehäuse angeordnet sein (nicht dargestellt).

Beim Darstellungsbeispiel ist der Elektromotor 1 als Innenläufer-Motor ausgebildet bzw. ist der Rotor 20 zumindest teilweise innerhalb des Stators 10 angeordnet.

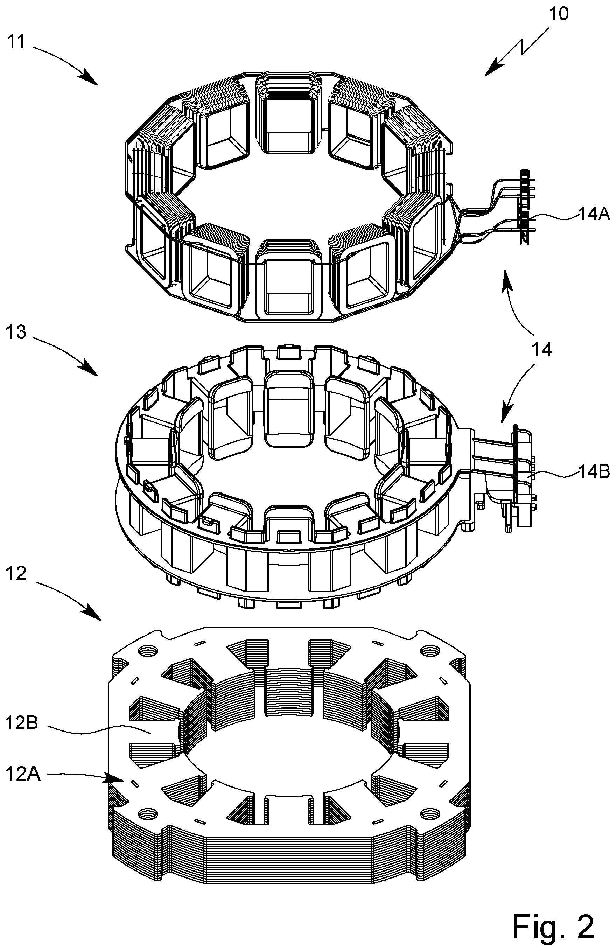

Fig. 2 zeigt den Stator/Ständer 10 des Elektromotors 1 in einer schematischen Explosionsdarstellung.

Der Stator 10 weist mehrere, hier zwölf, Wicklungen/Spulen 11, einen Statorkern 12, einen Spulenträger 13 und/oder eine Anschlusseinrichtung 14 auf.

Der Statorkern 12 umfasst vorzugsweise mehrere gestapelte Elektrobleche bzw. Statorbleche 12A, die mehrere, hier zwölf, Spulenabschnitte 12B bilden, wobei jede Wicklung/Spule 11 um einen Spulenabschnitt 12B gewickelt ist und/oder sich jeweils ein Spulenabschnitt 12B durch eine Spule 11 hindurch erstreckt.

Optional kann der Spulenträger 13 vorgesehen sein, der die Spulen 11 trägt, wie in Fig. 1 dargestellt. Es ist jedoch auch möglich, die Spulen 11 direkt um die Spulenabschnitte 12B zu wickeln.

Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 mit Strom versorgt werden. Vorzugsweise weist die Anschlusseinrichtung 14 einen oder mehrere elektrische Anschlüsse 14A und/oder einen Anschlussträger 14B auf, der bevorzugt einstückig mit dem Spulenträger 13 bzw. einem Teil des Spulenträgers 13 ausgebildet ist.

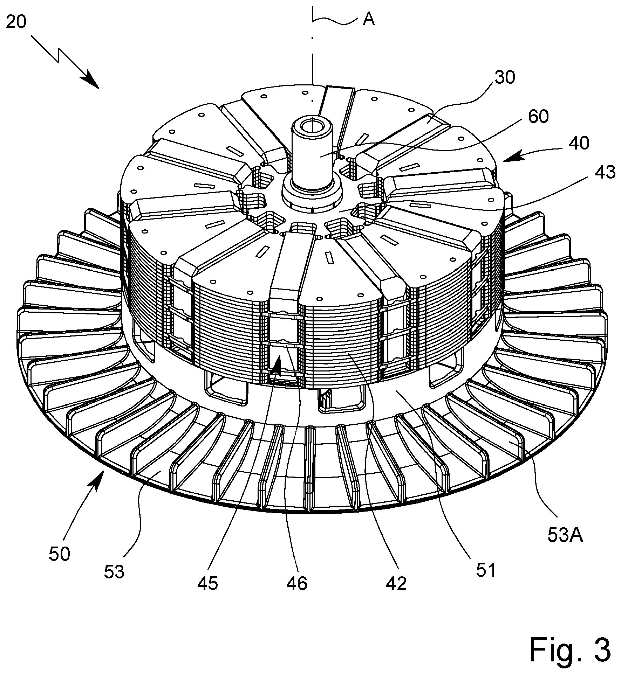

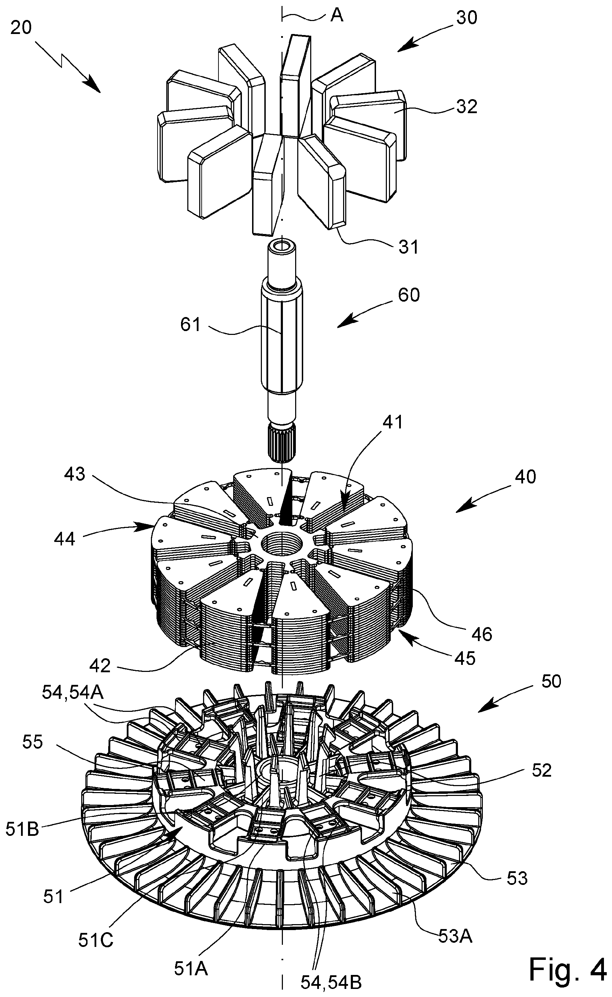

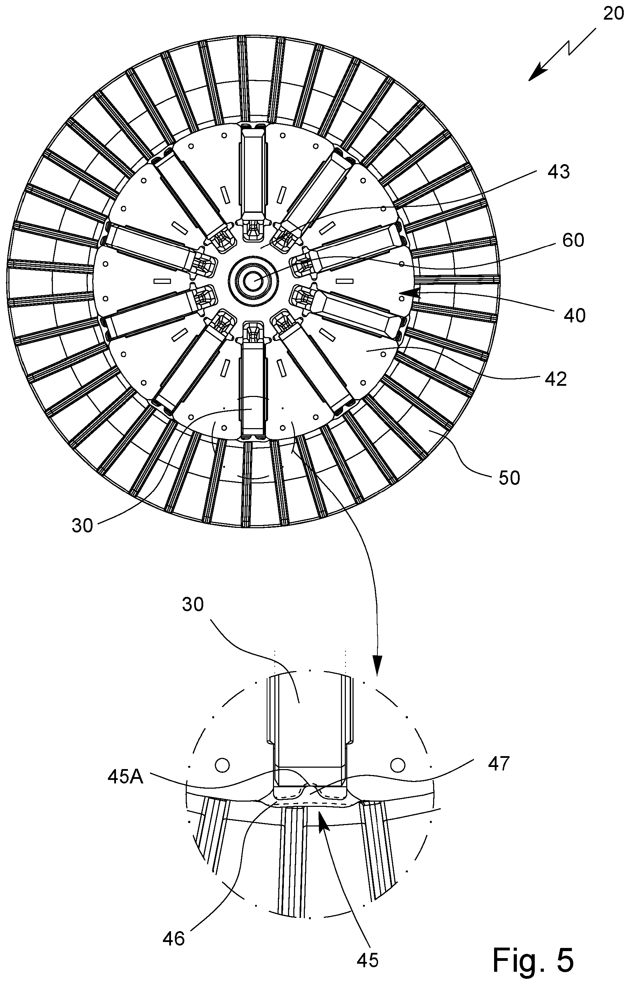

Fig. 3 zeigt den vorschlagsgemäßen Rotor/Läufer 20 in einer schematischen, perspektivischen Ansicht, die zu Fig. 1 korrespondiert. Fig. 4 zeigt den Rotor 20 in einer schematischen Explosionsdarstellung. Fig. 5 zeigt den Rotor 20 in einer schematischen Draufsicht.

Der Rotor 20 weist mehrere, hier zehn, Permanentmagnete 30, einen Rotorkern 40, eine Montageeinrichtung 50 und/oder eine Welle 60 auf.

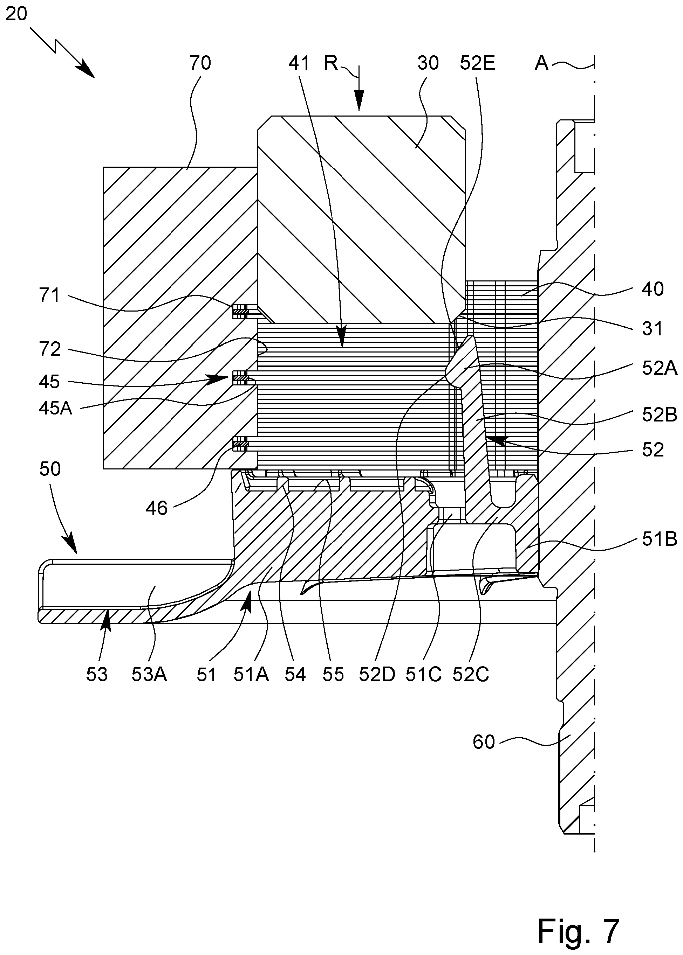

Die Permanentmagnete 30 sind vorzugsweise zumindest im Wesentlichen quaderförmig ausgebildet. An ihren Kanten können die Permanentmagneten 30 abgerundet sein und/oder Einführschrägen 31 aufweisen, worauf noch später im Zusammenhang mit Fig. 7 näher eingegangen wird.

Vorzugsweise sind die Permanentmagnete 30 flach ausgebildet bzw. weisen jeweils zwei gegenüberliegende Flachseiten 32 auf.

Vorzugsweise sind die Permanentmagnete 30 in Richtung ihrer Dicke bzw. in die Richtung orthogonal zu den Flachseiten 32 polarisiert und/oder bilden die zwei Flachseiten 32 eines Permanentmagneten 30 unterschiedliche Pole.

Die Permanentmagnete 30 sind im Rotorkern 40 angeordnet bzw. eingebettet. Der Rotorkern 40 weist hierzu entsprechende Magnetaufnahmen 41 auf.

Die Permanentmagnete 30 sind vorzugsweise so im Rotor 20 bzw. Rotorkern 40 angeordnet, dass sie in Umfangsrichtung - bezogen auf die Welle 60 bzw. Rotationsachse A - polarisiert sind und/oder dass die Flächennormalen ihrer Flachseiten 32 in Umfangsrichtung zeigen.

Die Permanentmagnete 30 bzw. Magnetaufnahmen 41 sind vorzugweise sternförmig im Rotor 20 bzw. Rotorkern 40 und/oder um die Welle 60 bzw. Rotationsachse A herum angeordnet und/oder erstrecken sich bzw. haben eine Haupt-/Längserstreckung - bezogen auf die Welle 60 bzw. Rotationsachse A - in radialer Richtung.

Die Permanentmagnete 30 sind vorzugsweise derart angeordnet, dass die einander zugewandten Pole bzw. Flachseiten 32 zweier benachbarter Permanentmagnete 30 die gleiche Polarität aufweisen, so dass der zwischen den Polen bzw. Flachseiten 32 angeordnete Teil bzw. Sektorabschnitt 42 des Rotorkerns 40 entsprechend polarisiert ist bzw. einen entsprechenden Pol des Rotorkerns 40 bildet. Mit anderen Worten sind zwei benachbarte Permanentmagnete 30 vorzugsweise in entgegengesetzte Richtungen polarisiert.

Grundsätzlich können die Permanentmagnete 30 jedoch auch anders geformt, polarisiert und/oder angeordnet sein, beispielsweise mit einer Längserstreckung in Umfangsrichtung oder senkrecht/tangential zur radialen Richtung. Die Magnetaufnahmen 41 sind dann entsprechend geformt/angeordnet.

Der Rotorkern 40 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 40.

Der Rotorkern 40 ist auf der Welle 60 befestigt, insbesondere kraft-, form- und/oder stoffschlüssig mit der Welle 60 verbunden.

Zur Befestigung des Rotorkerns 40 kann die Welle 60 Riffeln bzw. Hervorstehungen 61 aufweisen. Wenn der Rotorkern 40 auf die Welle 60 aufgezogen wird, graben sich die Hervorstehungen 61 in den Rotorkern 40 ein und befestigen diesen so auf der Welle 60. Hier sind jedoch auch andere Lösungen möglich.

Der Rotorkern 40 umfasst vorzugsweise mehrere, hier zehn, Sektorsegmente bzw. Sektorabschnitte 42, wobei zwischen zwei benachbarten Sektorabschnitten 42 jeweils eine Magnetaufnahme 41 gebildet bzw. ein Permanentmagnet 30 aufgenommen ist. Insbesondere sind die Magnetaufnahmen 41 seitlich bzw. in Umfangsrichtung jeweils von zwei Sektorabschnitten 42 begrenzt.

Vorzugsweise weist der Rotorkern 40 einen inneren Abschnitt 43 zur Aufnahme der Welle 60 auf, der ringförmig bzw. hohlzylindrisch ausgebildet ist. Die Sektorabschnitte 42 erstrecken sich vorzugsweise ausgehend vom inneren Abschnitt 43 in radialer Richtung.

Die Sektorabschnitte 42 sind vorzugsweise jeweils keilförmig bzw. tortenstückförmig ausgebildet und/oder haben vorzugsweise jeweils einen Querschnitt (orthogonal zur Rotationsachse A) in Form eines Kreissektors.

Durch die Permanentmagneten 30 werden bzw. sind die Sektorabschnitte 42 magnetisiert bzw. polarisiert, insbesondere wobei die Sektorabschnitte 42 alternierend Nord- und Südpole bilden.

Vorzugsweise sind die Magnetaufnahmen 41 an die Form der Permanentmagnete 30 angepasst und/oder weisen entsprechende Abmessungen bzw. Dimensionen auf.

Beim Darstellungsbeispiel sind die Magnetaufnahmen 41 vorzugsweise schlitzförmig oder schachtförmig ausgebildet bzw. bilden Aufnahmeschlitze oder Aufnahmeschachte und/oder erstrecken sich in radialer Richtung.

Die Breite der Magnetaufnahmen 41 bzw. der Abstand von zwei benachbarten Sektorabschnitten 42 ist vorzugsweise zumindest im Wesentlichen konstant.

Die Permanentmagnete 30, Magnetaufnahmen 41 und/oder Sektorabschnitte 42 sind vorzugsweise gleichmäßig über einen Kreisumfang verteilt. Benachbarte Permanentmagneten 30 schließen also vorzugsweise einen Winkel von 360° geteilt durch die Anzahl der Permanentmagnete 30 ein. Entsprechendes gilt für die Magnetaufnahmen 41 bzw. Sektorabschnitte 42.

Vorzugsweise umfasst der Rotorkern 40 mehrere gestapelte Elektrobleche bzw. Rotorbleche 44 oder ist daraus gebildet. Die Rotorbleche 44 sind entsprechend geformt bzw. gestanzt, um die Magnetaufnahmen 41 bzw. Sektorabschnitte 42 des Rotorkerns 40 zu realisieren.

In radialer Richtung, insbesondere radial innen bzw. an ihrer der Welle 60 bzw. Rotationsachse A zugewandten Seite, sind die Magnetaufnahmen 41 vorzugsweise jeweils durch den inneren Abschnitt 43 begrenzt.

Die Magentaufnahmen 41 weisen jeweils einen (radialen) Anschlag 45 auf.

In radialer Richtung, insbesondere radial außen bzw. an ihrer von der Welle 60 bzw. Rotationsachse A abgewandten Seite, sind die Magnetaufnahmen 41 vorzugsweise jeweils durch den Anschlag 45 begrenzt.

Der Anschlag 45 kann eine durchgängige Anschlagfläche oder mehrere, separate Anschlagflächen 45A aufweisen. Beim Darstellungsbeispiel ist der jeweilige Anschlag 45 durch mehrere, hier drei, insbesondere punktförmige, Anschlagflächen 45A gebildet, wie insbesondere Fig. 3 und 4 veranschaulichen.

Vorzugsweise werden die Anschläge 45 bzw. deren Anschlagsflächen 45A vom Rotorkern 40 gebildet, besonders bevorzugt von einem, mehreren oder allen Rotorblechen 44.

Es sind jedoch auch Lösungen möglich, bei denen die Anschläge 45 bzw. Anschlagsflächen 45A durch andere bzw. separate Bauteile gebildet sind, die in bzw. radial außen an der Magnetaufnahme 41 bzw. zwischen jeweils zwei Sektorabschnitten 42 angeordnet sind.

Vorzugsweise sind die Anschläge 45 bzw. die sie bildenden Bauteile mit den jeweiligen Sektorabschnitten 42 kraft-, form- und/oder stoffschlüssig verbunden.

Beispielsweise könnte die Montageeinrichtung 50 in einer alternativen Ausführung (nicht dargestellt) eine oder mehrere sich in axialer Richtung erstreckende Wände aufweisen, die entsprechende Anschläge 45 bzw. Anschlagsflächen 45A bilden.

Beim Darstellungsbeispiel sind die Anschläge 45 bzw. Anschlagsflächen 45A vorzugsweise durch einzelne Rotorbleche 44 gebildet. Hierzu weist der Rotorkern 40 unterschiedlich geformte Rotorbleche 44 auf, wobei eine erste Form Anschlagflächen 45A aufweist bzw. bildet, während eine zweite Form keine derartigen Anschlagflächen aufweist.

Vorzugsweise werden durch ein Rotorblech 44 mehrere Anschlagflächen 45A gebildet, insbesondere für jede Magnetaufnahme 41 (genau) eine Anschlagfläche 45A.

Beim Darstellungsbeispiel sind mehrere, hier drei, Rotorbleche 44 mit Anschlagflächen 45A vorgesehen, zwischen denen jeweils Rotorbleche 44 ohne Anschlagflächen angeordnet sind, so dass in axialer Richtung mehrere, hier drei, insbesondere im Wesentlichen punktförmige, Anschlagflächen 45A pro Magnetaufnahme 41 gebildet werden bzw. sind.

Es sind jedoch auch Lösungen möglich, bei denen mehrere Rotorbleche 44 mit Anschlagflächen 45A direkt übereinandergestapelt sind, so dass diese Rotorbleche 44 eine durchgehende bzw. sich in axialer Richtung erstreckende Anschlagfläche 45A bilden. Zwischen derartigen Rotorblechpaketen können dann wiederum Rotorbleche 44 ohne Anschlagfläche 45A angeordnet sein.

Auch ist es möglich, alle Rotorbleche 44 mit Anschlagflächen 45A auszubilden, so dass eine durchgehende, sich über die gesamte axiale Erstreckung der Magnetaufnahme 41 erstreckende Anschlagfläche 45A gebildet wird/ist.

Die unterschiedlichen Rotorbleche 44 sind vorzugsweise aus dem gleichen Material hergestellt, insbesondere aus Elektroblech gestanzt oder geschnitten.

Der Rotor 20 bzw. Rotorkern 40 weist vorzugsweise Stege 46 auf, die die Anschläge 45 bzw. Anschlagflächen 45A bilden oder aufweisen.

Die Stege 46 sind jeweils zwischen zwei Sektorabschnitten 42 angeordnet bzw. bilden jeweils eine Brücke zwischen zwei Sektorabschnitten 42.

Vorzugsweise erstrecken sich die Stege 46 in Umfangrichtung und/oder sind radial außen bzw. am Außenumfang des Rotorkerns 40 angeordnet.

Besonders bevorzugt weist/weisen ein oder mehrere Rotorbleche 44 die Stege 46 auf bzw. bildet/bilden diese. Ein solches Rotorblech 44 weist insbesondere einen geschlossenen Außenumfang auf. Im Gegensatz hierzu sind Rotorbleche 44, die keine Anschlagflächen 45A bzw. keine Stege 46 aufweisen, vorzugsweise an ihrem Außenumfang an den Stellen geöffnet, an denen die Magnetaufnahmen 41 gebildet werden.

Fig. 5 zeigt in einem vergrößerten Ausschnitt einen der Stege 46 im Detail. Die übrigen Stege 46 sind vorzugsweise gleich ausgebildet.

Der Steg 46 weist vorzugsweise eine insbesondere mittige Verdickung bzw. Nase 47 auf, die die Anschlagfläche 45A bildet.

Die Nase 47 erstreckt sich vorzugsweise orthogonal zur Haupterstreckungsrichtung des Stegs 46 und/oder in radialer Richtung und/oder in die Magnetaufnahme 41 hinein. Durch die Nase 47 wird insbesondere eine zumindest im Wesentlichen punktförmige Anschlagfläche 45A realisiert.

Vorzugsweise ist der Anschlag 45 bzw. Steg 46 federnd/nachgiebig ausgebildet, insbesondere um einen Toleranzausgleich beim Einsetzen des Permanentmagneten 30 zu ermöglichen.

Dies wird insbesondere dadurch erreicht, dass der Anschlag 45 bzw. Steg 46 - zumindest bevor der Permanentmagnet 30 in die Magnetaufnahme 41 eingesetzt ist - radial nach innen (in Richtung der Rotationsachse A bzw. der Welle 60) gebogen bzw. gewölbt ist, wie in Fig. 5 mit Strichlinien angedeutet ist.

Beim Einsetzen des Permanentmagneten 30 kann es dazu kommen, dass dieser derart gegen die Anschlagfläche 45A bzw. Nase 47 bzw. den Steg 46 drückt, das sich der Steg 46 verbiegt/nachgibt. Durch die Innenwölbung kann jedoch verhindert werden, dass der Steg 46 zu weit nach außen gedrückt wird bzw. es kann verhindert werden, dass sich der Durchmesser des Rotorkerns 40 (im Bereich des Stegs 46) vergrößert bzw. zu stark vergrößert.

Fig. 5 zeigt in dem vergrößerten Ausschnitt exemplarisch den Fall, dass der Steg 46 bei eingesetztem Permanentmagneten 30 nach außen gedrückt ist, wobei die ursprüngliche Lage bzw. Wölbung des Stegs 46 (vor dem Einsetzen des Permanentmagneten 30) gestrichelt dargestellt ist. Je nach Größe des Permanentmagneten 30 und/oder der auf ihn wirkenden Kraft ist es jedoch auch möglich, dass der Steg 46 weniger oder gar nicht nach außen gedrückt ist/wird.

Besonders bevorzugt weist der Rotorkern 40 im Bereich der Anschläge 45 bzw. Stege 46 den gleichen oder einen geringeren Durchmesser auf als im Bereich der Sektorabschnitte 42, insbesondere auch bei eingesetztem Permanentmagneten 30. Mit anderen Worten ist der Abstand bzw. Radius zwischen Rotationsachse A und Anschlag 45 bzw. Steg 46 kleiner oder gleich dem Abstand bzw. Radius zwischen Rotationsachse A und Sektorabschnitt-Außenumfang.

Die Montageeinrichtung 50 ist vorzugsweise an der Welle 60 befestigt, insbesondere kraft-, form- und/oder stoffschlüssig. Bevorzugt erfolgt die Befestigung wie bei dem Rotorkern 40, beispielsweise mittels der Hervorhebungen 61 oder einer Presspassung.

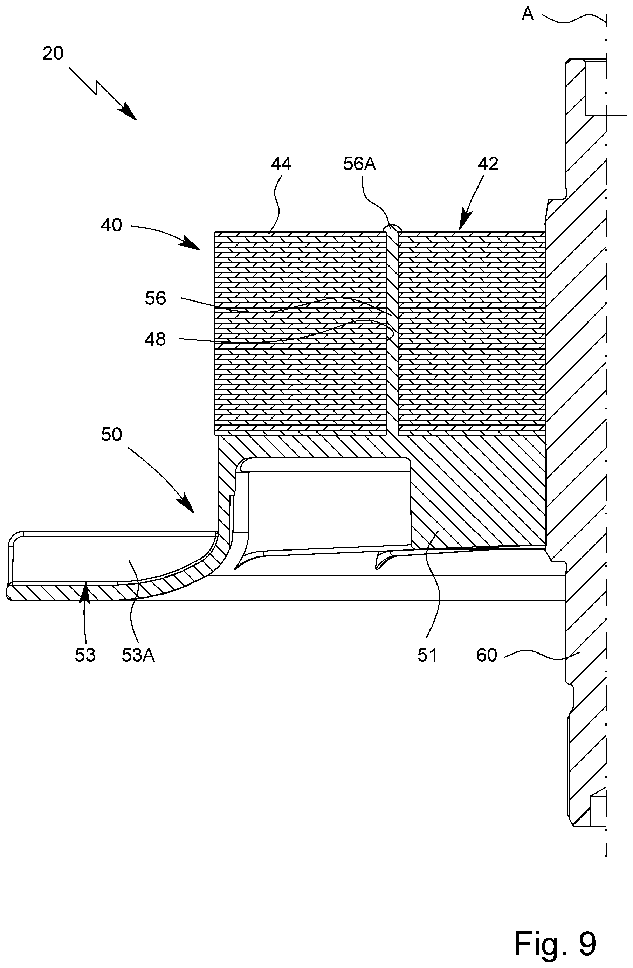

Zusätzlich oder alternativ kann die Montageeinrichtung 50 an dem Rotorkern 40 befestigt sein, insbesondere kraft-, form- und/oder stoffschlüssig. Beispielsweise kann die Montageeinrichtung 50 mit dem Rotorkern 40 verklebt, heißverstemmt und/oder verrastet sein und/oder eine Schnappverbindung bilden. Hierauf wird im Zusammenhang mit Fig. 9 später noch genauer eingegangen.

Auch ist es möglich, dass die Montageeinrichtung 50 an den Rotorkern 40 und/oder die Welle 60 angespritzt ist.

Die Montageeinrichtung 50 weist einen Grundkörper 51, mehrere, hier zehn, Fixierelemente 52 und/oder einen Lüfterabschnitt 53 auf.

Vorzugsweise ist die Montageeinrichtung 50, der Grundkörper 51 und/oder der Lüfterabschnitt 53 aus Kunststoff hergestellt und/oder einstückig gebildet, insbesondere spritzgegossen.

Die Montageeinrichtung 50 und/oder der Grundkörper 51 sind/ist vorzugsweise scheibenartig oder plattenartig geformt und/oder zumindest im Wesentlichen ringförmig bzw. radförmig ausgebildet und/oder rotationsymmetrisch. Die Rotationsachse A bildet vorzugsweise eine Symmetrieachse der Montageeinrichtung 50 und/oder des Grundkörpers 51.

Der Grundkörper 51 weist vorzugsweise einen äußeren Abschnitt 51A, einen inneren Abschnitt 51B und/oder einen Verbindungsabschnitt 51C auf.

Die Begriffe "äußerer" und "innerer" beziehen sich hierbei auf die Lage bezüglich der Rotationsachse A bzw. Welle 60. Der äußere Abschnitt 51A hat also einen größeren Abstand von der Rotationsachse A bzw. Welle 60 als der innere Abschnitt 51B.

Der äußere und/oder innere Abschnitt 51A, 51B sind/ist vorzugsweise zumindest im Wesentlichen ringförmig. Insbesondere sind der äußere Abschnitt 51A und der innere Abschnitt 51B konzentrisch zueinander angeordnet und/oder (in radialer Richtung) voneinander beabstandet.

Der innere Abschnitt 51B ist vorzugsweise auf die Welle 60 gesteckt bzw. mit der Welle 60 verbunden.

Der Verbindungsabschnitt 51C verbindet den äußeren Abschnitt 51A mit dem inneren Abschnitt 51C und/oder erstreckt sich zwischen den Abschnitten 51A, 51B in radialer Richtung und/oder ist stegartig bzw. speichenartig ausgebildet. Vorzugsweise sind mehrere Verbindungsabschnitte 51C ausgebildet.

Der Lüfterabschnitt 53 ist vorzugsweise ringförmig ausgebildet und/oder erstreckt sich in radialer Richtung vom Grundkörper 51, insbesondere dem äußeren Abschnitt 51A.

Mit dem Lüfterabschnitt 53 ist die Montageeinrichtung 50 als Lüfter ausgebildet bzw. kann die Montageeinrichtung 50 als Lüfter betrieben werden. Hierzu weist der Lüfterabschnitt 53 vorzugsweise entsprechende Lamellen bzw. Flügel 53A oder dergleichen auf.

Der Lüfterabschnitt 53 bzw. die als Lüfter ausgebildete Montageeinrichtung 50 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert die Montageeinrichtung 50 bzw. der Lüfterabschnitt 53 bei Betrieb des Elektromotors 1 um die Rotationsachse A und kann so entsprechend Luft fördern.

Die Montageeinrichtung 50 ist vorzugsweise axial unterhalb bzw. bodenseitig des Rotorkerns 40 angeordnet - zumindest während des Einbaus bzw. der Montage der Permanentmagnete 30.

Wie bereits eingangs erwähnt, beziehen sich die Bezeichnungen "unterhalb", "bodenseitig", etc. vorzugsweise nur auf die Ausrichtung des Elektromotors 1 bzw. Rotors 20 beim Einbau der Permanentmagneten 30 bzw. die in den Figuren dargestellte Ausrichtung. Wird der Elektromotor 1 in eine Maschine eingebaut, kann dies auch in einer anderen Ausrichtung erfolgen, bei der sich die Montageeinrichtung 50 beispielsweise oberhalb des Rotorkerns 40 befindet.

Der Grundkörper 51 der Montageeinrichtung 50 oder dessen äußerer Abschnitt 51A begrenzt die Magnetaufnahmen 41 axial, insbesondere (zumindest während der Montage der Permanentmagneten 30) von unten. Der Grundkörper 51 oder der äußere Abschnitt 51A bildet einen axialen Anschlag bzw. ein axiales Gegenlager bzw. eine oder mehrere axiale Anlageflächen für die Permanentmagneten 30.

Auf der der Montageeinrichtung 50 gegenüberliegenden Seite, insbesondere von oben, ist die Magnetaufnahme 41 vorzugsweise offen. Die Permanentmagnete 30 können folglich von der der Montageeinrichtung 50 gegenüberliegenden Seite bzw. von oben in die Magnetaufnahme 41 eingesetzt werden.

Besonders bevorzugt weist die Montageeinrichtung 50, insbesondere der Grundkörper 51 oder dessen äußerer Abschnitt 51A, ein oder mehrere Anlageelemente bzw. Anschlagelemente 54 auf, die den axialen Anschlag bzw. das axiale Gegenlager bzw. axiale Anlageflächen für die Permanentmagneten 30 bilden.

Bevorzugt sind die Anschlagelemente 54 durch insbesondere linienartige Erhöhungen oder Rippen gebildet, wie insbesondere in Fig. 4 dargestellt. Hierbei verlaufen bzw. erstrecken sich die Anschlagelemente 54 vorzugsweise in Umfangsrichtung bzw. quer, insbesondere senkrecht, zur radialen Richtung und/oder in radialer Richtung. Exemplarisch sind in Fig. 4 zwei sich quer erstreckende Anschlagelemente 54A und zwei sich in radialer Richtung erstreckende Anschlagelemente 54B bezeichnet.

Beim Darstellungsbeispiel gemäß Fig. 4 sind jedem Permanentmagneten 30 bzw. jeder Magnetaufnahme 41 mehrere Anschlagelemente 54 zugeordnet, hier drei quer zur radialen Richtung verlaufende Anschlagelemente 54A und/oder zwei in radialer Richtung verlaufende Anschlagelemente 54B. Jedoch ist es auch möglich, jedem Permanentmagneten 30 bzw. jeder Magnetaufnahme 41 genau ein Anschlagelement 54 zuzuordnen oder ein Anschlagelement 54 für mehrere Permanentmagneten 30 bzw. Magnetaufnahmen 41 auszubilden. Beispielsweise könnte die Montageeinrichtung 50 bzw. der Grundkörper 51 bzw. der äußere Abschnitt 51A ein oder mehrere kreisförmige Anschlagelemente 54 aufweisen, die sich über alle Magnetaufnahmen 41 erstrecken.

Alternativ kann der axiale Anschlag bzw. das axiale Gegenlager bzw. die axiale Anlagefläche auch durch einen flächigen Bereich des Grundkörper 51 oder dessen äußeren Abschnitts 51A gebildet sein.

Der Grundkörper 51 oder dessen äußerer Abschnitt 51A weist Reservoirs/Aufnahmekammern 55 auf bzw. bildet solche.

Die Aufnahmekammern 55 dienen der Aufnahme von überdosiertem Klebstoff, was später im Zusammenhang mit dem Montageverfahren zur Montage der Permanentmagneten noch näher erläutert wird.

Die Reservoirs/Aufnahmekammern 55 sind vorzugsweise wannenförmig, beckenförmig oder trogförmig bzw. als Wannen, Becken oder Tröge ausgebildet.

Die Aufnahmekammern 55 sind vorzugsweise durch entsprechende (axiale) Vertiefungen im Grundkörper 51 bzw. des äußeren Abschnitts 51A gebildet.

Die Aufnahmekammern 55 sind vorzugsweise (direkt) unterhalb der Permanentmagnete 30 bzw. Magnetaufnahmen 41 angeordnet.

Vorzugsweise sind die Aufnahmekammern 55 seitlich, insbesondere in radialer Richtung und/oder Umfangsrichtung, von einem oder mehreren Anschlagelementen 54 begrenzt.

Beim Darstellungsbeispiel gemäß Fig. 4 sind jedem Permanentmagneten 30 bzw. jeder Magnetaufnahme 41 mehrere Aufnahmekammern 55 zugeordnet. Jedoch ist es auch möglich, jedem Permanentmagneten 30 bzw. jeder Magnetaufnahme 41 genau eine Aufnahmekammer 55 zuzuordnen oder eine Aufnahmekammer 55 für mehrere Permanentmagneten 30 bzw. Magnetaufnahmen 41 auszubilden. In letzterem Fall könnte die Montageeinrichtung 50 bzw. der Grundkörper 51 bzw. der äußere Abschnitt 51A beispielsweise eine oder mehrere kreisförmige Vertiefungen/Aufnahmekammern 55 aufweisen, die sich über alle Magnetaufnahmen 41 erstrecken.

Die einem Permanentmagneten 30 bzw. einer Magnetaufnahme 41 zugeordnete(n) Aufnahmekammer(n) 55 hat/haben vorzugsweise ein (gemeinsames) Aufnahmevolumen von mindestens 0,25 ml oder 0,5 ml, insbesondere mindestens 1 ml oder 2 ml, und/oder von höchstens 10 ml, insbesondere höchstens 5 ml.

Die Fixierelemente 52 sind vorzugsweise zwischen dem äußeren Abschnitt 51A und dem inneren Abschnitt 51B angeordnet, wie insbesondere in Fig. 4 dargestellt. Vorzugsweise sind die Fixierelemente 52 (auch) jeweils zwischen zwei Verbindungsabschnitten 52C angeordnet. Mit anderen Worten werden vom äußeren Abschnitt 51A, inneren Abschnitt 51B und den Verbindungsabschnitten 51C jeweils insbesondere kreissektorförmige Bereiche gebildet bzw. abgegrenzt, in denen jeweils ein Fixierelement 52 angeordnet ist.

Die Fixierelemente 52 sind vorzugsweise gleichmäßig über einen Kreisumfang verteilt.

Vorzugsweise sind die Fixierelemente 52 radial innen an der Montageeinrichtung 50 bzw. in den jeweiligen Magnetaufnahme 41 und/oder nah an der Rotationsachse A bzw. Welle 60 angeordnet.

Vorzugsweise ist jedem Permanentmagneten 30 bzw. jeder Magnetaufnahme 41 (genau) ein Fixierelement 52 zugeordnet und/oder ragt in jede Magnetaufnahme 41 (genau) ein Fixierelement 52. Es sind aber auch Lösungen möglich, bei denen pro Magnetaufnahme 41 mehrere Fixierelemente 52 vorgesehen sind.

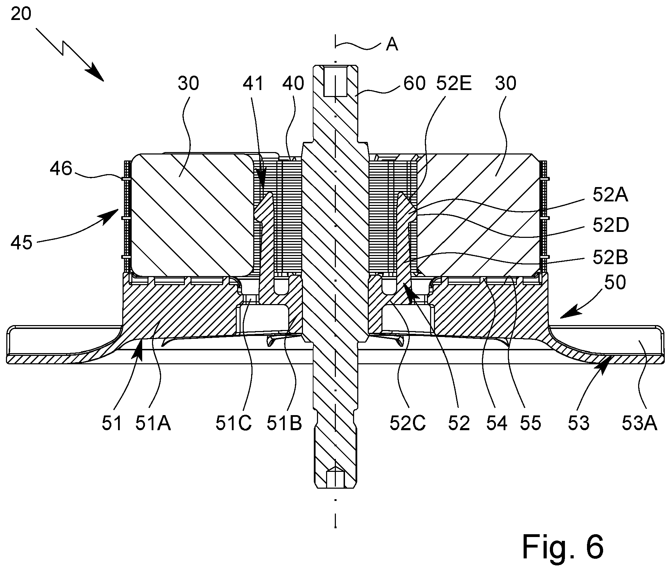

Der Aufbau und die Funktion der Fixierelemente 52 werden anhand der Figuren 6 und 7 näher erläutert. Die Fig. 6 zeigt einen schematischen Schnitt des vorschlagsgemäßen Rotors 20 durch zwei gegenüberliegender Magnetaufnahmen 41 bzw. Permanentmagnete 30 bzw. entlang der Rotationsachse A. Fig. 7 zeigt einen entsprechenden Schnitt, der im Bereich einer Magnetaufnahme 41 vergrößert dargestellt ist, und zwar vor bzw. beim Einsetzen des Permanentmagneten 30.

Im Folgenden werden der bevorzugte Aufbau und die bevorzugte Funktion anhand eines Fixierelements 52 näher erläutert. Die Ausführungen gelten vorzugsweise entsprechend für die übrigen Fixierelemente 52, die bevorzugt gleich ausgebildet sind.

Das Fixierelement 52 ist vorzugsweise länglich, insbesondere armartig, ausgebildet.

Das Fixierelement 52 weist vorzugsweise ein freies Ende bzw. einen Kopf 52A, einen Verbindungsarm 52B und/oder ein festes Ende bzw. einen Anbindungsabschnitt 52C auf. Der Verbindungsarm 52B verbindet den Kopf 52A und den Anbindungsabschnitt 52C miteinander bzw. schließt sich unmittelbar an den Kopf 52A und den Anbindungsabschnitt 52C an.

Das Fixierelement 52 ist mit dem Grundkörper 51 verbunden bzw. einstückig gebildet, insbesondere mit dem inneren Abschnitt 51B und/oder über seinen Anbindungsabschnitt 52C.

Vorzugsweise ist das Fixierelement 52 aus einem elastischen Material und/oder dem gleichen Material wie der Grundkörper 51, insbesondere Kunststoff, gebildet, vorzugsweise spritzgegossen.

Das Fixierelement 52 ist flexibel bzw. biegbar ausgebildet. Insbesondere kann das Fixierelement 52 in radialer Richtung und/oder um sein festes Ende bzw. den Anbindungsabschnitt 52C und/oder relativ zum Grundkörper 51 gebogen bzw. verschwenkt werden.

Das Fixierelement 52, insbesondere der Verbindungsarm 52B, erstreckt sich vorzugsweise zumindest im Wesentlichen in axialer Richtung und/oder ragt quer, insbesondere zumindest im Wesentlichen senkrecht, vom Grundkörper 51 ab.

Hierbei ist zu berücksichtigen, dass sich das Fixierelement 52 bzw. der Verbindungsarm 52B wegen der Flexibilität/Biegbarkeit nicht exakt parallel zur Rotationsachse A bzw. Welle 60 erstrecken muss, sondern auch einen (geringen) Winkel mit der Rotationsachse A bzw. Welle 60 einschließen kann - sowohl vor als auch nach der Montage des Permanentmagneten 30.

Unter "zumindest im Wesentlichen in axialer Richtung" ist also vorzugsweise zu verstehen, dass sich das Fixierelement 52 bzw. der Verbindungsarm 52B mehr in axiale Richtung als in radiale Richtung erstreckt und/oder mit der Rotationsachse A bzw. Welle 60 einen Winkel von weniger als 45° oder 30°, insbesondere weniger als 20° oder 10°, einschließt.

Zumindest vor der Montage weist die (Haupt-)Erstreckung bzw. Längserstreckung des Fixierelements 52 bzw. Verbindungsarms 52B - zusätzlich zu der axialen Komponente - vorzugsweise eine radial nach außen gerichtete Komponente auf, wie in Fig. 7 dargestellt.

Vorzugsweise beträgt der Winkel zwischen der Rotationsachse A bzw. Welle 60 und dem Fixierelement 52 bzw. Verbindungsarm 52B vor der Montage des Permanentmagneten 30 mindestens 3°, insbesondere mindestens 5° und/oder höchstens 15°, insbesondere höchstens 10°.

Vorzugsweise beträgt der Winkel zwischen der Haupterstreckungsrichtung des Grundkörpers 51 und dem Fixierelement 52 bzw. Verbindungsarm 52B vor der Montage des Permanentmagneten 30 und/oder vor der Montage der Montageeinrichtung 50 am Rotor 20 höchstens 87°, insbesondere höchstens 85° und/oder mindestens 75°, insbesondere mindestens 80°.

Besonders bevorzugt schließt das Fixierelement 52 bzw. der Verbindungsarm 52B vor der Montage des Permanentmagneten 30 einen größeren Winkel mit der Rotationsachse A bzw. Welle 60 ein als im montierten Zustand des Permanentmagneten, wie auch in den Figuren in Fig. 6 (montierter Zustand) und Fig. 7 (unmontierter Zustand) dargestellt.

Im montierten Zustand erstreckt sich das Fixierelement 52 vorzugsweise im Wesentlichen parallel zu Rotationsachse A, wie in Fig. 6 dargestellt. Abhängig von der radialen Erstreckung des Permanentmagneten 30 kann jedoch auch im montierten Zustand noch eine Abweichung hiervon vorhanden sein.

Vorzugsweise ist das Fixierelement 52 zumindest im Wesentlichen L-förmig ausgebildet, wobei der Anbindungsabschnitt 52C einen ersten Schenkel und der Verbindungsarm 52B, insbesondere mit dem Kopf 52A, einen zweiten Schenkel bildet.

Vorzugsweise erstreckt sich der Anbindungsabschnitt 52C in radialer Richtung und/oder der Verbindungsarm 52B zumindest im Wesentlichen in axialer Richtung.

Im Vergleich zum Verbindungsarm 52B ist der Anbindungsabschnitt 52C vorzugsweise kurz, insbesondere mit einer Längserstreckung von weniger als ein Drittel oder ein Viertel der Längserstreckung des Verbindungsarms 52B, so dass die Haupterstreckungsrichtung des Fixierelements 52 also durch den Verbindungsarm 52B gegeben ist.

Die Haupterstreckung bzw. axiale Erstreckung des Fixierelements 52 ist vorzugsweise geringer als die axiale Erstreckung der Magnetaufnahme 41. Mit anderen Worten ragt das Fixierelement 52 vorzugsweise axial in die Magnetaufnahme 41 hinein, aber nicht durch die Magnetaufnahme 41 hindurch.

Besonders bevorzugt beträgt die Haupterstreckung bzw. axiale Erstreckung des Fixierelements 52 zumindest im Wesentlichen die Hälfte der axialen Erstreckung der Magnetaufnahme 41. Insbesondere ist der Kopf 52A zumindest im Wesentlichen mittig (in axialer Richtung) in der Magnetaufnahme 41 angeordnet.

Das Fixierelement 52, insbesondere der Kopf 52A, weist vorzugsweise eine Anlagefläche 52D zur Anlage am Permanentmagneten 30 auf oder bildet eine solche, insbesondere an seiner radial nach außen weisenden Seite.

Der Kopf 52A ist vorzugsweise abgerundet, insbesondere an seiner radial außen liegenden Seite bzw. im Bereich der Anlagefläche 52D.

An seiner Oberseite bzw. der vom Verbindungsarm 52B abgewandten Seite weist der Kopf 52A vorzugsweise eine Schräge 52E für die Montage des Permanentmagneten 30 auf. Hierauf wird später noch genauer eingegangen.

Im montierten Zustand bzw. bei eingesetztem Permanentmagneten 30, wie in Fig. 6 dargestellt, drückt das Fixierelement 52, insbesondere dessen Kopf 52A, mit der Anlagefläche 52D gegen den Permanentmagneten 30, insbesondere eine radial innenliegenden Stirnseite des Permanentmagneten 30, und/oder liegt dort an. Besonders bevorzugt liegt die Anlagefläche 52D zumindest im Wesentlichen axial mittig gegen den Permanentmagneten 30 an.

Das Fixierelement 52 ist vorzugsweise gegen den Permanentmagneten 30 gespannt und/oder übt eine radial nach außen gerichtete Kraft auf den Permanentmagneten 30 aus.

Das Fixierelement 52 drückt vorzugsweise in radialer Richtung nach außen auf den Permanentmagneten 30 bzw. drückt den Permanentmagneten 30 gegen den Anschlag 45 bzw. den/die Anschlagfläche(n) 45A.

Insbesondere ist der Permanentmagnet 30 zwischen dem Anschlag 45 bzw. der/den Anschlagfläche(n) 45A und dem Fixierelement 52 bzw. dessen Kopf 52A bzw. der Anschlagfläche 52D fixiert bzw. geklemmt.

Es sind auch Lösungen möglich, bei denen das Fixierelement 52 mit dem Permanentmagneten 30 einen (axialen) Formschluss bzw. eine (axiale) Rast- oder Schnappverbindung bildet bzw. bei denen der Kopf 52A als Rastnase ausgebildet ist.

Hierzu kann das Fixierelement 52, insbesondere mit dem Kopf 52A, in eine entsprechende Ausnehmung des Permanentmagneten 30 o. dgl. eingreifen.

Alternativ ist es auch möglich, dass das Fixierelement 52 mit dem Kopf 52A den Permanentmagneten 30 (an der Magnet-Oberseite bzw. der von der Montageeinrichtung 50 abgewandten Seite) umgreift bzw. übergreift, um einen Formschluss bzw. eine Rast- oder Schnappverbindung zu bilden bzw. um den Permanentmagneten 30 axial zu sichern. In diesem Fall ragt das Fixierelement 52 insbesondere durch die Magnetaufnahme 41 hindurch.

Über die Klemmung und/oder Rastung der Fixierelemente 52 kann vorzugsweise die Montageeinrichtung 50 - zusätzlich oder alternativ zu anderen Befestigungen/Befestigungsmöglichkeiten - am Rotorkern 40 gehalten sein.

Nachfolgend wird ein bevorzugtes Verfahren für die Montage bzw. das Einsetzen eines Permanentmagneten 30 in den Rotor 20 bzw. Rotorkern 40 anhand von Fig. 7 näher erläutert. Die übrigen Permanentmagnete 30 werden bzw. sind vorzugsweise in gleicher Weise montiert, so dass die Ausführungen entsprechend gelten.

Bei bzw. vor der Montage des Permanentmagneten 30 sind der Rotorkern 40 und die Montageeinrichtung 50 vorzugsweise bereits aneinander und/oder an der Welle 60 befestigt.

Die Magnetaufnahme 41 ist vorzugsweise seitlich bzw. in Umfangsrichtung von jeweils zwei benachbarten Sektorabschnitten 42, radial außen von dem Anschlag 45, radial innen von dem innerem Abschnitt 43 und/oder axial, insbesondere bodenseitig bzw. von unten, von der Montageeinrichtung 50, insbesondere dem/den Anschlagelement(en) 54 begrenzt bzw. definiert. Auf der der Montageeinrichtung 50 gegenüberliegenden Seite, insbesondere von oben, ist die Magnetaufnahme 41 vorzugsweise offen.

Optional kann bei der Montage eine Führungseinrichtung 70, insbesondere Führungsschiene, verwendet werden, um den Permanentmagneten 30 beim Einsetzen in die Magnetaufnahme 41 zu führen, insbesondere ein Verkanten des Permanentmagneten 30 zu verhindern. Je nach Bedarf kann die Führungseinrichtung 70 jedoch auch weggelassen werden, beispielsweise wenn der Anschlag 45 eine durchgehende, sich axial erstreckende Fläche aufweist und/oder eine Führung für den Permanentmagneten 30 bildet.

Vorzugsweise wird die Führungseinrichtung 70 radial von außen an die Magnetaufnahme 41 herangefahren bzw. von radial außen an der Magnetaufnahme 41 angeordnet. Hierzu weist die Führungseinrichtung 70 insbesondere Ausnehmungen 71 für die Stege 46 auf. Wegen der Ausnehmungen 71 kann die Führungseinrichtung 70 zwischen den Stegen 46 (radial) in die Magnetaufnahme 41 hineinragen.

Es sind jedoch auch Lösungen möglich, bei denen die Führungseinrichtung 70 axial von der offenen Seite der Magnetaufnahme 41 bzw. von oben in die Magnetaufnahme 41 eingeführt wird bzw. dazu ausgebildet ist.

Die Führungseinrichtung 70 weist vorzugsweise eine sich axial erstreckende Führungsfläche bzw. Führungskante 72 auf, entlang der der Permanentmagnet 30 geführt werden kann.

Besonders bevorzugt sind die Führungskante 72 und die Anschlagfläche(n) 45A des Anschlags 45 derart voneinander beabstandet, dass die Führungskante 72 radial weiter innen liegt als die Anschlagsfläche(n) 45A. Hierzu können die Ausnehmungen 71 entsprechend dimensioniert sein. Bei der Ausführung mit von oben eingeführter Führungseinrichtung 70 weist diese vorzugsweise eine entsprechende Dicke (in radialer Richtung) auf.

Besonders bevorzugt wird vor dem Einsetzen des Permanentmagneten 30 Klebstoff an der Magnetaufnahme 41 bzw. den seitlichen Begrenzungen der Magnetaufnahme 41, insbesondere den beiden entsprechenden Sektorabschnitten 42, aufgetragen bzw. appliziert, insbesondere an der oberen bzw. offenen Seite.

Der Permanentmagnet 30 wird axial von der offenen Seite der Magnetaufnahme 41 bzw. von oben in die Magnetaufnahme 41 eingesetzt bzw. eingeführt, wie in Fig. 7 mit einem Pfeil R verdeutlicht ist.

Beim Einsetzen wird der Permanentmagnet 30 vorzugsweise entlang der Führungskante 72 geführt. Aufgrund der Beabstandung von Anschlag 45 bzw. Anschlagfläche(n) 45A und Führungskante 72 ist der Permanentmagnet 30 ebenfalls vom Anschlag 45 bzw. den Anschlagfläche(n) 45A (radial) beabstandet. Insbesondere wenn keine Führungseinrichtung 70 verwendet wird bzw. der Anschlag 45 die Führung bildet kann der Permanentmagnet 30 jedoch auch bereits beim Einführen an der Anschlagfläche 45A anliegen bzw. daran geführt werden.

Wenn der Permanentmagnet 30 teilweise, insbesondere etwa zur Hälfte, in die Magnetaufnahme 41 eingeschoben wurde, trifft der Permanentmagnet 30 vorzugsweise auf das Fixierelement 52, insbesondere den Kopf 52A, bzw. kommt es zwischen Permanentmagnet 30 und Fixierelement 52 bzw. Kopf 52A zur Anlage, insbesondere zwischen der Einführschräge 31 des Permanentmagneten 30 und der Schräge 52E des Fixierelements 52. Es ist auch möglich, nur eine Schräge entweder am Permanentmagneten 30 oder am Fixierelement 52 vorzusehen und auf eine entsprechende Gegenschräge zu verzichten.

Beim weiteren Einschieben drückt bzw. verspannt bzw. verformt bzw. verbiegt der Permanentmagnet 30 vorzugsweise das Fixierelement 52 in radialer Richtung nach innen, insbesondere bis der Permanentmagnet 30 an der Schräge 52E abgeglitten ist und/oder die Anlagefläche 52D am Permanentmagneten 30 zur Anlage kommt. Das Fixierelement 52 ist dann vorzugsweise (in radialer Richtung) gegen den Permanentmagneten 30 gespannt.

Das Verspannen bzw. Verbiegen/Verformen des Fixierelements 52 wird insbesondere durch die Schräge(n) 31, 52E und/oder dadurch begünstigt, dass die Erstreckung des Fixierelement 52 zumindest vor dem Verspannen/Verbiegen/Verformen auch eine radial nach außen gerichtete Komponente aufweist, wie zuvor beschrieben.

Der Permanentmagnet 30 wird dann weiter in axialer Richtung bzw. Einführrichtung R in die Magnetaufnahme 41 geschoben, bis er vollständig in die Magnetaufnahme 41 eingesetzt ist bzw. axial ausgerichtet/positioniert ist. Insbesondere wird der Permanentmagnet 30 so weit in axialer Richtung bzw. Einführrichtung R in die Magnetaufnahme 41 geschoben, bis er axial an die Montageeinrichtung 50 bzw. den Grundkörper 51, insbesondere das/die Anschlagelement(e) 54, anschlägt bzw. dort zur Anlage kommt.

Wie bereits zuvor erwähnt, sind auch Lösungen möglich, bei denen das Fixierelement 52 (zusätzlich) mit dem Permanentmagneten verrastet wird, insbesondere indem der Kopf 52A in eine Ausnehmung des Permanentmagneten 30 eingreift oder den Permanentmagneten 30 an seiner Oberseite bzw. von der Montageeinrichtung 50 abgewandten Seite übergreift. In diesem Fall erfolgt das Eingreifen bzw. Übergreifen vorzugsweise, sobald der Permanentmagnet 30 vollständig eingesetzt ist bzw. axial anschlägt. Der Kopf 52A ist insbesondere in einer entsprechenden axialen Position bzw. Höhe in oder oberhalb der Magnetaufnahme 41 angeordnet.

Der Permanentmagnet 30 schleppt den Klebstoff vorzugsweise beim Einsetzen in die Magnetaufnahme 41 mit bzw. nach unten, so dass sich Spalte zwischen Permanentmagnet 30 und Magnetaufnahme 41, insbesondere Rotorkern 40 bzw. Sektorabschnitten 42, mit Klebstoff füllen.

Überdosierter Klebstoff sammelt sich in der/den Aufnahmekammer(n) 55 bzw. wird dort eingetragen. Besonders bevorzugt verklebt der überdosierte Klebstoff in den Aufnahmekammern 55 den Permanentmagneten 30 zusätzlich mit der Montageeinrichtung 50.

Das gegen den Permanentmagneten 30 gespannte Fixierelement 52 übt eine radial nach außen gerichtete Kraft auf den Permanentmagneten 30 aus.

Falls keine Führungseinrichtung 70 verwendet wird, ist der Permanentmagnet 30 nach dem axialen Ausrichten/Positionieren auch bereits in radialer Richtung positioniert/ausgerichtet und wird von dem Fixierelement 52 in dieser Position gehalten bzw. (vor-)fixiert. Insbesondere drückt das Fixierelement 52 den Permanentmagneten 30 gegen den Anschlag 45, so dass dieser zwischen Fixierelement 52 und Anschlag 45 geklemmt ist.

Falls die Führungseinrichtung 70 verwendet wird, wird diese nach dem axialen Positionieren/Ausrichten entfernt - bei Verwendung von Klebstoff bevor dieser ausgehärtet ist.

Aufgrund der bevorzugten Beabstandung von Führungskante 72 und Anschlag 45 bzw. Anschlagfläche(n) 45A liegt der Permanentmagnet 30 zunächst nur an der Führungskante 72, jedoch nicht an dem Anschlag 45 bzw der/den Anschlagfläche(n) 45A (radial) an. Wird nun die Führungseinrichtung 70 entfernt, entsteht daher (temporär) eine Lücke zwischen dem Permanentmagneten 30 und dem Anschlag 45. Diese wird jedoch wegen der Vorspannung des Fixierelements 52 unmittelbar nach Entfernen der Führungseinrichtung 70 geschlossen.

Unmittelbar nach Entfernen der Führungseinrichtung 70 drückt bzw. schiebt das gegen den Permanentmagneten 30 gespannte Fixierelement 52 den Permanentmagneten 30 radial nach außen, bis dieser an den Anschlag 45 bzw. den/die Anschlagfläche(n) 45A stößt. Der Permanentmagnet 30 wird so in radialer Richtung vom Fixierelement 52 positioniert.

Bei dieser Positionierung entspannt sich das Fixierelement 52 teilweise. Vorzugsweise ist aber die verbleibende Vorspannung groß genug, um den Permanentmagneten 30 in Position zu halten bzw. zu klemmen bzw. zu fixieren, insbesondere - falls Klebstoff verwendet wird - vorzufixieren bis der Klebstoff ausgehärtet ist.

Gegebenenfalls kann jedoch auch eine zusätzliche Einrichtung (nicht dargestellt) verwendet werden, die zwischen das Fixierelement 52 und den inneren Abschnitt 43 geschoben bzw. geklemmt wird, um eine zusätzliche radial nach außen wirkende Kraft auf den Permanentmagneten 30 auszuüben. Hierzu ist das Fixierelement 52 vorzugsweise auf seiner radial innen liegenden Seite bzw. der der Anschlagfläche 52D gegenüberliegenden Seite angeschrägt, wie auch in Fig. 6 und 7 angedeutet. Eine solche Einrichtung wird nach dem Aushärten des Klebstoffs vorzugsweise wieder entfernt.

Nach der Montage des Permanentmagneten 30 und/oder dem Aushärten des Klebstoffs verbleibt die Montageeinrichtung 50 vorzugsweise am Rotor 20 bzw. bildet einen Teil des Rotors 20 bzw. Elektromotors 1 im Betrieb.

Durch das vorschlagsgemäße Verfahren wird eine einfach, schnelle, zuverlässige, kostengünstige und/oder sichere Montage des/der Permanentmagneten 30 ermöglicht. Insbesondere kann eine einfache, sichere und zuverlässige Positionierung bzw. (Vor-)Fixierung des/der Permanentmagneten am Rotor bzw. Rotorkern sichergestellt werden.

Einzelne Verfahrensschritte des Verfahrens können ggf. auch in einer anderen Reihenfolge erfolgen und/oder weggelassen werden.

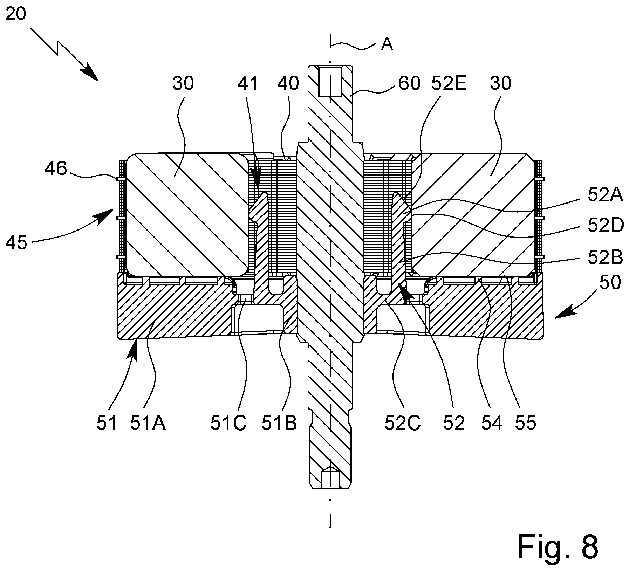

Nachfolgend werden weitere Ausführungsformen des vorschlagsgemäßen Rotors 20, der auch für den vorschlagsgemäßen Elektromotor 1 entsprechend eingesetzt werden kann, anhand der Figuren 8 und 9 erläutert, wobei primär lediglich auf wesentliche Unterschiede bzw. neue Aspekte eingegangen wird. Die bisherigen Ausführungen und Erläuterungen gelten insbesondere entsprechend oder ergänzend, auch ohne Wiederholung.

Wie zuvor beschrieben und in den Figuren 1 bis 7 dargestellt, ist die Montageeinrichtung 50 bevorzugt als Lüfter ausgebildet bzw. weist den Lüfterabschnitt 53 auf. Es ist jedoch auch möglich, die Montageeinrichtung 50 ohne Lüfterfunktion bzw. ohne Lüfterabschnitt 53 auszubilden. Fig. 8 zeigt den Rotor 20 in einer zweiten Ausführungsform mit einer solchen Montageeinrichtung 50 in einem zu Fig. 6 korrespondierenden Schnitt.

Die zweite Ausführungsform unterscheidet sich vorzugsweise von der ersten Ausführungsform nur dadurch, dass kein Lüfterabschnitt 53 an der Montageeinrichtung 50 vorgesehen ist. Im Übrigen ist der Rotor 20 bzw. die Montageeinrichtung 50 vorzugsweise wie bei der ersten Ausführungsform ausgebildet und weist insbesondere die Fixierelemente 52 und/oder Aufnahmekammern 55 auf. Die vorherigen Erläuterungen gelten daher entsprechend.

Bevorzugt verbleibt auch die Montageeinrichtung 50 der zweiten Ausführungsform am Rotor 20 bzw. wird am Rotor 20 wie für die erste Ausführungsform beschrieben befestigt. Alternativ ist es jedoch auch möglich, dass die Montageeinrichtung 50 nur für die Positionierung und/oder Vorfixierung der Permanentmagnete 30 verwendet und anschließend - insbesondere nach Aushärten des Klebstoffs - wieder entfernt wird.

Wie bereits im Zusammenhang mit der ersten Ausführungsform erwähnt, kann die Montageeinrichtung 50 auch - zusätzlich oder alternativ zum Befestigen an der Welle 60 - kraft-, form- und/oder stoffschlüssig (direkt) mit dem Rotorkern 40 verbunden sein. Die Fig. 9 zeigt beispielhaft den Rotor 20 gemäß einer dritten Ausführungsform mit einer solchen Befestigung. Fig. 9 zeigt hierbei einen Schnitt entlang der Rotationsachse A durch einen Sektorabschnitt 42 des Rotorkerns 40.

Zur Befestigung der Montageeinrichtung 50 am Rotorkern 40 weist die Montageeinrichtung 50 gemäß der dritten Ausführungsform vorzugsweise ein oder mehrere Befestigungselemente 56 auf.

Die Befestigungselemente 56 sind vorzugsweise einstückig mit dem Grundkörper 51 und/oder aus dem gleichen Material, insbesondere Kunststoff, gebildet, vorzugsweise spritzgegossen.

Vorzugsweise sind die Befestigungselemente 56 stiftartig ausgebildet und/oder ragen bzw. erstrecken sich, insbesondere vom Grundkörper 51, in axialer Richtung.

Vorzugsweise ragen die Befestigungselemente 56 in den Rotorkern 40, insbesondere dessen Sektorabschnitte 42, oder greifen darin ein. Besonders bevorzugt erstrecken sich die Befestigungselemente 56 jeweils (vollständig) durch den Rotorkern 40 bzw. die jeweiligen Sektorabschnitte 42 hindurch.

Hierbei können pro Sektorabschnitt 42 mehrere Befestigungselemente 56 oder nur ein Befestigungselement 56 vorgesehen sein. Auch ist es möglich, dass weniger Befestigungselemente 56 als Sektorabschnitte 42 vorgesehen sind, so dass beispielsweise nur für jeden zweiten Sektorabschnitt 42 ein Befestigungselement 56 vorgesehen ist (bei dem Beispiel mit zehn Sektorabschnitten 42 also nur fünf Befestigungselemente 56).

Die Befestigungselemente 56 sind vorzugsweise gleichmäßig über einen Kreisumfang verteilt, insbesondere um Unwuchten zu vermeiden.

Der Rotorkern 40 bzw. die Sektorabschnitte 42 weisen vorzugsweise entsprechende Durchbrechungen 48 auf, in die jeweils ein Befestigungselement 56 eingreift oder (hindurch) ragt. Die Durchbrechungen 48 erstrecken sich vorzugsweise entsprechend in axialer Richtung. Insbesondere weist jedes Rotorblech 44 entsprechende Löcher auf, so dass die übereinandergestapelten Rotorbleche 44 mit den Löchern die jeweilige Durchbrechung 48 bilden.

Durch den Eingriff der Befestigungselemente 56 in den Rotorkern 40, insbesondere die Sektorabschnitte 42 bzw. Durchbrechungen 48, ist die Montageeinrichtung 50 vorzugsweise kraft-, form- und/oder stoffschlüssig mit dem Rotorkern 40 verbunden.

Besonders bevorzugt weisen die Befestigungselemente 56 jeweils einen Kopf 56A an ihrem freien Ende bzw. dem vom Grundkörper 51 abgewandten Ende auf. Der Kopf 56A ist vorzugsweise an der Oberseite des Rotorkerns 40 bzw. Sektorabschnitts 42 bzw. des obersten Rotorblechs 44 angeordnet.

Der Kopf 56A hat vorzugsweise einen größeren Durchmesser als die Durchbrechung 48 bzw. als der restliche Abschnitt des Befestigungselements 56.

Besonders bevorzugt ist das Befestigungselement 56 bzw. der Kopf 56A mit dem Rotorkern 40 heißverstemmt. In diesem Fall ist es nicht nötig, den Kopf 56A bereits vor der Montage auszubilden. Stattdessen kann der Kopf 56A, nachdem das Befestigungselement 56 durch die Durchbrechung 48 hindurchgesteckt wurde, mittels Heißverstemmen erzeugt werden.

Alternativ oder zusätzlich ist es jedoch auch möglich, den Kopf 56A flexibel auszubilden, so dass er bei der Montage durch die Durchbrechung 48 hindurch geschoben werden kann. Ggf. kann dann auf ein Heißverstemmen verzichtet werden.

Der Kopf 56A bildet vorzugsweise einen Formschluss mit dem Rotorkern 40. Auf diese Weise wird bevorzugt eine formschlüssige Verbindung zwischen Montageeinrichtung 50 und Rotorkern 40 erzielt. Im Falle des Heißverstemmens kann zusätzlich auch ein stoffschlüssige Verbindung gebildet sein.

Alternativ oder zusätzlich kann auch eine Presspassung oder sonstige Verbindung zwischen Befestigungselement 56 und Durchbrechung 48 vorgesehen sein.

Wie bereits eingangs erwähnt, können der Rotorkern 40 und die Montageeinrichtung 50 auch auf andere Arten miteinander verbunden sein, beispielsweise mittels einer Schnappverbindung. Die Befestigungselemente 56 sind dann entsprechend ausgebildet, beispielsweise als Schnapphaken oder dergleichen.

Alternativ oder zusätzlich kann eine Befestigung der Montageeinrichtung 50 auch über die Klemmung der Fixierelemente 52 an den Permanentmagneten 30 - und somit mittelbar am Rotorkern 40 - erfolgen, wie bereits erläutert.

Beim Darstellungsbeispiel gemäß Fig. 9 weist die Montageeinrichtung 50 den Lüfterabschnitt 53 auf. Selbstverständlich ist es aber auch möglich, die Montageeinrichtung 50 gemäß dritter Ausführungsform ohne Lüfterabschnitt 53 auszubilden.

Vorzugsweise gelten die Ausführungen bezüglich der ersten und zweiten Ausführungsform für die dritte Ausführungsform entsprechend. Insbesondere weist auch die Montageeinrichtung 50 gemäß der dritten Ausführungsform die Fixierelemente 52 und/oder Aufnahmekammern 55 auf. Die Befestigung von Rotorkern 40 und Montageeinrichtung 50 gemäß der dritten Ausführungsform kann jedoch prinzipiell auch unabhängig von den Fixierelementen 52 und/oder Aufnahmekammern 55 oder sonstigen Merkmalen der ersten bzw. zweiten Ausführungsform realisiert sein.

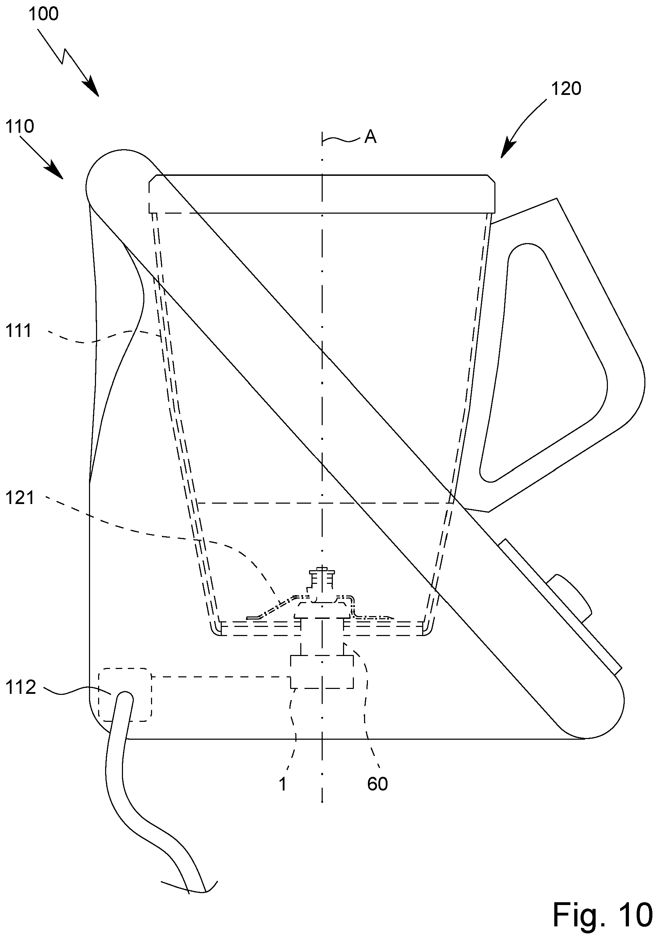

Fig. 10 zeigt schematisch eine vorschlagsgemäße Küchenmaschine 100 zur Zubereitung von Speisen bzw. Bearbeitung von Lebensmitteln. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 10 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Welle 60 - optional über einen Wellenaufsatz - mit dem Rührer 121 verbunden oder verbindbar ist und/oder - in der Anschlussposition - von unten formschlüssig in den Boden des Gefäßes 120 eingreift.

Vorzugsweise entspricht die Rotationsachse A des Elektromotors 1 der Drehachse des Rührers 121 und/oder einer Mittelachse des Gefäßes 120, die mittig durch das Gefäß 120 verläuft, wie in Fig. 10 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 mit elektrischem Strom zu versorgen.

Einzelne Aspekte, Merkmale und/oder Verfahrensschritte der vorliegenden Erfindung können unabhängig, aber auch in beliebiger Kombination und/oder Reihenfolge realisiert werden.

### Bezugszeichenliste:

- 1: Elektromotor
- 10: Stator
- 11: Spule
- 12: Statorkern
- 12A: Statorblech
- 12B: Spulenabschnitt
- 13: Spulenträger
- 14: Anschlusseinrichtung
- 14A: elektrischer Anschluss
- 14B: Anschlussträger
- 20: Rotor
- 30: Permanentmagnet
- 31: Einführschräge
- 32: Flachseite
- 40: Rotorkern
- 41: Magnetaufnahme
- 42: Sektorabschnitt
- 43: innerer Abschnitt
- 44: Rotorblech
- 45: Anschlag
- 45A: Anschlagfläche
- 46: Steg
- 47: Nase
- 48: Durchbrechung
- 50: Montageeinrichtung
- 51: Grundkörper
- 51A: äußerer Abschnitt
- 51B: innerer Abschnitt
- 51C: Verbindungsabschnitt
- 52: Fixierelement
- 52A: Kopf
- 52B: Arm
- 52C: Anbindungsabschnitt
- 52D: Anlagefläche
- 52E: Schräge
- 53: Lüfterabschnitt
- 53A: Flügel
- 54: Anschlagelement
- 54A: quer verlaufendes Anschlagelement
- 54B: radial verlaufendes Anschlagelement
- 55: Aufnahmekammer
- 56: Befestigungselement
- 56A: Kopf
- 60: Welle
- 61: Hervorstehung
- 70: Führungseinrichtung
- 71: Ausnehmung
- 72: Führungskante
- 100: Küchenmaschine
- 110: Basisstation
- 111: Aufnahme
- 112: Stromversorgung
- 120: Gefäß
- 121: Rührer
- A: Rotationsachse
- R: Einführrichtung

## Patentansprüche

1. Elektromotor (1), insbesondere für eine Küchenmaschine (100), mit einem Rotor (20) und einem Stator (10),
wobei der Rotor (20) um eine Rotationsachse (A) relativ zum Stator (10) drehbar ist, wobei der Rotor (20) einen Rotorkern (40) mit Magnetaufnahmen (41) aufweist, die radial nach außen jeweils durch einen radialen Anschlag (45) begrenzt sind, und
wobei der Rotor (20) eine Vielzahl von Permanentmagneten (30) aufweist, wobei jeweils ein Permanentmagnet (30) in eine Magnetaufnahme (41) eingesetzt ist,
wobei der Rotor (20) eine Montageeinrichtung (50) mit einem Grundkörper (51) zur Montage der Permanentmagnete (30) aufweist und die Permanentmagnete (30) mit dem Rotorkern (40) und/oder Montageeinrichtung (50) verklebt sind,
wobei die Montageeinrichtung (50) zumindest teilweise flexible Fixierelemente (52) zur Fixierung der Permanentmagnete (30) aufweist, wobei die Fixierelemente (52) jeweils vom Grundkörper (51) in axialer Richtung in die Magnetaufnahmen (41) ragen und die Permanentmagnete (30) in radialer Richtung gegen die Anschläge (45) drücken, und
wobei der Grundkörper (51) der Montageeinrichtung (50) die Magnetaufnahmen (41) axial begrenzt und jeweils einen axialen Anschlag für die Permanentmagneten (30) bildet,
**dadurch gekennzeichnet,**
**dass** der Grundkörper (51) eine oder mehrere Aufnahmekammern (55) zur Aufnahme von Klebstoff beim Verkleben der Permanentmagneten (30) mit dem Rotorkern (40) und/oder mit der Montageeinrichtung (50) bildet.

2. Elektromotor nach Anspruch 1, wobei die Montageeinrichtung (50) einstückig ausgebildet und/oder spritzgegossen ist.

3. Elektromotor nach Anspruch 1 oder 2, wobei der Rotor (20) einen Lüfter zur Kühlung des Elektromotors (1) aufweist, wobei der Lüfter die Montageeinrichtung (50) aufweist oder bildet.

4. Elektromotor nach einem der voranstehenden Ansprüche, wobei die eine oder mehrere Aufnahmekammern (55) unterhalb der Permanentmagnete (30) gebildet ist/sind.

5. Elektromotor nacheinem der voranstehenden Ansprüche, wobei die Montageeinrichtung (50) ein Anschlagelement (54) als axialen Anschlag für einen oder mehrere Permanentmagneten (30) aufweist oder bildet, wobei das Anschlagelement (54) eine oder mehrere Aufnahmekammern (55) seitlich begrenzt.

6. Elektromotor nach einem der voranstehenden Ansprüche, wobei die Montageeinrichtung (50) mehrere Aufnahmekammern zur Aufnahme von Klebstoff aufweist, wobei jeder Magnetaufnahme (41) bzw. jedem Permanentmagneten (30), mindestens eine Aufnahmekammer (55) zugeordnet ist.

7. Elektromotor nach einem der voranstehenden Ansprüche, wobei der Rotorkern (40) übereinandergelegte Rotorbleche (44) aufweist, wobei die radialen Anschläge (45) für die Permanentmagnete (30) von einem, mehreren oder allen Rotorblechen (44) gebildet sind.

8. Elektromotor nach einem der voranstehenden Ansprüche, wobei die radialen Anschläge (45) als Stege (46) ausgebildet sind und/oder radial nach innen bzw. in die jeweiligen Magnetaufnahmen (41) gebogen sind, und/oder wobei die radialen Anschläge (45) jeweils Nasen (47) aufweisen, die in radialer Richtung in die Magnetaufnahmen (41) ragen und eine Anlagefläche (45A) für den jeweiligen Permanentmagneten (30) bilden.

9. Elektromotor nach einem der voranstehenden Ansprüche, wobei sich die Fixierelemente (52) jeweils zumindest im Wesentlichen bis zur Hälfte der axialen Erstreckung der Magnetaufnahmen (41) in die Magnetaufnahmen (41) erstrecken und/oder zumindest im Wesentlichen mittig auf eine radial nach innen gewandte Stirnseite des jeweiligen Permanentmagneten (30) drücken.

10. Elektromotor nach einem der voranstehenden Ansprüche, wobei die Fixierelemente (52) jeweils einen Kopf (52A) aufweisen, der mit einer radial außen liegenden Anlagefläche (52D) gegen den Permanentmagneten (30) drückt bzw. daran anliegt, vorzugsweise wobei die Fixierelemente (52) jeweils einen sich an ihren Kopf (52A) anschließenden Verbindungsarm (52B) aufweisen, der biegbar mit dem Grundkörper (51) der Montageeinrichtung (50) verbunden ist.

11. Elektromotor nach einem der voranstehenden Ansprüche, wobei die Montageeinrichtung (50) stiftartige Befestigungselemente (56) aufweist, die axial durch den Rotorkern (40) hindurchragen und die Montageeinrichtung (50) an dem Rotorkern (40) befestigen, insbesondere wobei die Befestigungelemente (56) mit dem Rotorkern (40) heißverstemmt sind und/oder eine Schnappverbindung bilden.

12. Küchenmaschine (100) mit einem Elektromotor (1) nach einem der voranstehenden Ansprüche.

13. Verfahren zur Montage eines Elektromotors (1) mit einem Stator (10) und einem relativ zum Stator (10) um eine Rotationsachse (A) drehbaren Rotor (20), insbesondere eines Elektromotors (1) nach einem der Ansprüche 1 bis 11,
wobei der Rotor (20) einen Rotorkern (40) mit Magnetaufnahmen (41) aufweist, die radial nach außen jeweils durch einen radialen Anschlag (45) begrenzt sind,
wobei ein Permanentmagnet (30) in eine der Magnetaufnahmen (41) eingesetzt und mit dem Rotorkern (40) verklebt wird,
wobei beim Verkleben des Permanentmagneten (30) eine Montageeinrichtung (50) des Rotors (20) mit einem Grundkörper (51) verwendet wird,
wobei beim Einsetzen des Permanentmagneten (30) ein zumindest teilweise flexibles Fixierelement (52) der Montageeinrichtung (50), das in die Magnetaufnahme (41) axial hineinragt, den Permanentmagneten (30) in radialer Richtung gegen den zugeordneten Anschlag (45) drückt, um den Permanentmagneten (30) während des Aushärtens von Klebstoff zu fixieren, wobei die Fixierelemente (52) jeweils vom Grundkörper (51) in axialer Richtung in die Magnetaufnahmen (41) ragen, und
wobei der Grundkörper (51) der Montageeinrichtung (50) die Magnetaufnahme (41) axial begrenzt und einen axialen Anschlag für den Permanentmagneten (30) bildet,
**dadurch gekennzeichnet,**
**dass** überdosierter Klebstoff in einer vom Grundkörper (51) der Montageeinrichtung (50) gebildeten Aufnahmekammer (55) aufgenommen wird.

14. Verfahren nach Anspruch 13, wobei der Permanentmagnet (30) bis zum axialen Anschlag an den Grundkörper (51) oder ein von der Montageeinrichtung (50) gebildetes Anschlagelement (54) in die Magnetaufnahme (41) eingeführt wird.

15. Verfahren nach Anspruch 13 oder 14, wobei beim Einsetzen des Permanentmagneten (30) eine Führungseinrichtung (70) temporär verwendet wird, die eine Führung für den Permanentmagneten (30) bildet, insbesondere wobei die von der Führungseinrichtung (70) gebildete Führung von dem Anschlag (45) radial nach innen beabstandet ist, so dass erst bei Entfernen der Führungseinrichtung (70) der Permanentmagnet (30) gegen den Anschlag (45) gedrückt wird.

## Claims

1. Electric motor (1), in particular for a kitchen machine (100), with a rotor (20) and a stator (10),
wherein the rotor (20) is rotatable about a rotation axis (A) relative to the stator (10), the rotor (20) having a rotor core (40) with magnet receptacles (41) which are each delimited radially outwardly by a radial stop (45), and
wherein the rotor (20) has a plurality of permanent magnets (30), each permanent magnet (30) being inserted into a magnet receptacle (41),
wherein the rotor (20) has a mounting device (50) with a base body (51) for mounting the permanent magnets (30) and the permanent magnets (30) are adhesively bonded to the rotor core (40) and/or the mounting device (50),
wherein the mounting device (50) has at least partially flexible fixing elements (52) for fixing the permanent magnets (30), the fixing elements (52) each projecting from the base body (51) in axial direction into the magnet receptacles (41) and pressing the permanent magnets (30) in radial direction against the stops (45) and
wherein the base body (51) of the mounting device (50) axially delimits the magnet receptacles (41) and forms respectively an axial stop for the permanent magnets (30),
**characterized**
**in that** the base body (51) forms one or more receiving chambers (55) for receiving adhesive when adhesively bonding the permanent magnets (30) to the rotor core (40) and/or to the mounting device (50).

2. Electric motor according to claim 1, wherein the mounting device (50) is integrally formed and/or is injection-molded.

3. Electric motor according to claim 1 or 2, wherein the rotor (20) comprises a fan for cooling the electric motor (1), wherein the fan comprises or forms the mounting device (50).

4. Electric motor according to one of the preceding claims, wherein the one or more receiving chambers (55) is/are formed below the permanent magnets (30).

5. Electric motor according to one of the preceding claims, wherein the mounting device (50) comprises or forms a stop element (54) as axial stop for one or more permanent magnets (30), wherein the stop element (54) laterally delimits one or more receiving chambers (55).

6. Electric motor according to one of the preceding claims, wherein the mounting device (50) has a plurality of receiving chambers for receiving adhesive, wherein each magnet receptacle (41) and/or each permanent magnet (30) is assigned at least one receiving chamber (55).

7. Electric motor according to one of the preceding claims, wherein the rotor core (40) comprises stacked rotor sheets (44), wherein the radial stops (45) for the permanent magnets (30) are formed by one, multiple or all rotor sheets (44).

8. Electric motor according to one of the preceding claims, wherein the radial stops (45) are formed as webs (46) and/or are bent radially inwards and/or into the respective magnet receptacles (41), and/or wherein the radial stops (45) each have lugs (47) which project in the radial direction into the magnet receptacles (41) and form a contact surface (45A) for the respective permanent magnet (30).

9. Electric motor according to one of the preceding claims, wherein the fixing elements (52) each extend into the magnet receptacles (41) at least substantially up to half of the axial extent of the magnet receptacles (41) and/or press at least substantially centrally onto a radially inwardly facing end face of the respective permanent magnet (30).

10. Electric motor according to one of the preceding claims, wherein the fixing elements (52) each have a head (52A) which presses with a radially outer contact surface (52D) against the permanent magnet (30) and/or rests thereon, preferably wherein the fixing elements (52) each have a connecting arm (52B) which adjoins their head (52A) and is flexibly connected to the base body (51) of the mounting device (50).

11. Electric motor according to one of the preceding claims, wherein the mounting device (50) has pin-like fastening elements (56) which project axially through the rotor core (40) and fasten the mounting device (50) to the rotor core (40), in particular wherein the fastening elements (56) are heat-staked to the rotor core (40) and/or form a snap connection.

12. Kitchen machine (100) with an electric motor (1) according to one of the preceding claims.

13. Method of assembling an electric motor (1) having a stator (10) and a rotor (20) rotatable relative to the stator (10) about a rotation axis (A), in particular an electric motor (1) according to one of claims 1 to 11,
wherein the rotor (20) has a rotor core (40) with magnet receptacles (41) each of which is delimited radially outwardly by a radial stop (45),
wherein a permanent magnet (30) is inserted into one of the magnet receptacles (41) and adhesively bonded to the rotor core (40),
wherein a mounting device (50) of the rotor (20) with a base body (51) is used when adhesively bonding the permanent magnet (30),
wherein, during insertion of the permanent magnet (30), an at least partially flexible fixing element (52) of the mounting device (50), which projects axially into the magnet receptacle (41), presses the permanent magnet (30) in radial direction against the associated stop (45) to fix the permanent magnet (30) during curing of adhesive, the fixing elements (52) each projecting from the base body (51) in axial direction into the magnet receptacles (41), and
wherein the base body (51) of the mounting device (50) axially delimits the magnet receptacle (41) and forms an axial stop for the permanent magnet (30),
**characterized**
**in that** overdosed adhesive is received in a receiving chamber (55) formed by the base body (51) of the mounting device (50).

14. Method according to claim 13, wherein the permanent magnet (30) is inserted into the magnet receptacle (41) until it axially stops against the base body (51) or a stop element (54) formed by the mounting device (50).

15. Method according to claim 13 or 14, wherein during insertion of the permanent magnet (30) a guide device (70) is temporarily used, which forms a guide for the permanent magnet (30), in particular wherein the guide formed by the guide device (70) is spaced radially inwards from the stop (45), so that the permanent magnet (30) is pressed against the stop (45) only when the guide device (70) is removed.

## Revendications

1. Moteur électrique (1), en particulier pour un robot de cuisine (100), comprenant un rotor (20) et un stator (10),
le rotor (20) pouvant tourner autour d'un axe de rotation (A) par rapport au stator (10), le rotor (20) présentant un noyau de rotor (40) avec des logements d'aimant (41) qui sont limités radialement vers l'extérieur à chaque fois par une butée radiale (45), et
le rotor (20) présentant une pluralité d'aimants permanents (30), à chaque fois un aimant permanent (30) étant inséré dans un logement d'aimant (41),
le rotor (20) présentant un dispositif de montage (50) avec un corps de base (51) pour le montage des aimants permanents (30) et les aimants permanents (30) étant collés au noyau de rotor (40) et/ou au dispositif de montage (50),
le dispositif de montage (50) présentant des éléments de fixation (52) au moins partiellement flexibles pour la fixation des aimants permanents (30), les éléments de fixation (52) faisant saillie à chaque fois depuis le corps de base (51) dans la direction axiale dans les logements d'aimant (41) et pressant les aimants permanents (30) dans la direction radiale contre les butées (45), et
le corps de base (51) du dispositif de montage (50) limitant axialement les logements d'aimant (41) et formant à chaque fois une butée axiale pour les aimants permanents (30),
**caractérisé**
**en ce que** le corps de base (51) forme une ou plusieurs chambres de réception (55) pour la réception de colle lors du collage des aimants permanents (30) au noyau de rotor (40) et/ou au dispositif de montage (50).

2. Moteur électrique selon la revendication 1, le dispositif de montage (50) étant réalisé d'une seule pièce et/ou étant moulé par injection.

3. Moteur électrique selon la revendication 1 ou 2, le rotor (20) présentant un ventilateur pour le refroidissement du moteur électrique (1), le ventilateur présentant ou formant le dispositif de montage (50).

4. Moteur électrique selon l'une quelconque des revendications précédentes, l'une ou les plusieurs chambres de réception (55) étant formée(s) sous les aimants permanents (30).

5. Moteur électrique selon l'une quelconque des revendications précédentes, le dispositif de montage (50) présentant ou formant un élément de butée (54) en tant que butée axiale pour un ou plusieurs aimants permanents (30), l'élément de butée (54) limitant latéralement une ou plusieurs chambres de réception (55).

6. Moteur électrique selon l'une quelconque des revendications précédentes, le dispositif de montage (50) présentant plusieurs chambres de réception pour la réception de colle, au moins une chambre de réception (55) étant associée à chaque logement d'aimant (41) et/ou à chaque aimant permanent (30).

7. Moteur électrique selon l'une quelconque des revendications précédentes, le noyau de rotor (40) présentant des tôles de rotor (44) superposées, les butées radiales (45) pour les aimants permanents (30) étant formées par une, plusieurs ou toutes les tôles de rotor (44).

8. Moteur électrique selon l'une quelconque des revendications précédentes, les butées radiales (45) étant réalisées sous forme de nervures (46) et/ou étant courbées radialement vers l'intérieur et/ou dans les logements d'aimant (41) respectifs, et/ou les butées radiales (45) présentant à chaque fois des ergots (47) qui font saillie dans la direction radiale dans les logements d'aimant (41) et forment une surface d'appui (45A) pour l'aimant permanent (30) respectif.

9. Moteur électrique selon l'une quelconque des revendications précédentes, les éléments de fixation (52) s'étendant à chaque fois au moins sensiblement jusqu'à la moitié de l'étendue axiale des logements d'aimant (41) dans les logements d'aimant (41) et/ou pressant au moins sensiblement au centre sur un côté frontal tourné radialement vers l'intérieur de l'aimant permanent (30) respectif.

10. Moteur électrique selon l'une quelconque des revendications précédentes, les éléments de fixation (52) présentant à chaque fois une tête (52A) qui presse avec une surface d'appui (52D) située radialement à l'extérieur contre l'aimant permanent (30) et/ou s'applique contre celui-ci, de préférence les éléments de fixation (52) présentant à chaque fois un bras de liaison (52B) se raccordant à leur tête (52A), qui est connecté de manière flexible au corps de base (51) du dispositif de montage (50).

11. Moteur électrique selon l'une quelconque des revendications précédentes, le dispositif de montage (50) présentant des éléments de fixation (56) de type goupille qui font saillie axialement à travers le noyau de rotor (40) et fixent le dispositif de montage (50) au noyau de rotor (40), en particulier les éléments de fixation (56) étant matés à chaud avec le noyau de rotor (40) et/ou formant une liaison par encliquetage.

12. Robot de cuisine (100) comprenant un moteur électrique (1) selon l'une quelconque des revendications précédentes.

13. Procédé de montage d'un moteur électrique (1) comprenant un stator (10) et un rotor (20) pouvant tourner par rapport au stator (10) autour d'un axe de rotation (A), en particulier d'un moteur électrique (1) selon l'une quelconque des revendications 1 à 11,
le rotor (20) présentant un noyau de rotor (40) avec des logements d'aimant (41) qui sont limités radialement vers l'extérieur à chaque fois par une butée radiale (45),
un aimant permanent (30) étant inséré dans l'un des logements d'aimant (41) et étant collé au noyau de rotor (40),
un dispositif de montage (50) du rotor (20) avec un corps de base (51) étant utilisé lors du collage de l'aimant permanent (30),
lors de l'insertion de l'aimant permanent (30), un élément de fixation (52) au moins partiellement flexible du dispositif de montage (50), qui fait saillie axialement dans le logement d'aimant (41), pressant l'aimant permanent (30) dans la direction radiale contre la butée (45) associée, afin de fixer l'aimant permanent (30) pendant le durcissement de colle, les éléments de fixation (52) faisant saillie à chaque fois depuis le corps de base (51) dans la direction axiale dans les logements d'aimant (41), et
le corps de base (51) du dispositif de montage (50) limitant axialement le logement d'aimant (41) et formant une butée axiale pour l'aimant permanent (30),
**caractérisé**
**en ce que** de la colle surdosée est reçue dans une chambre de réception (55) formée par le corps de base (51) du dispositif de montage (50).

14. Procédé selon la revendication 13, l'aimant permanent (30) étant introduit dans le logement d'aimant (41) jusqu'à la butée axiale contre le corps de base (51) ou un élément de butée (54) formé par le dispositif de montage (50).

15. Procédé selon la revendication 13 ou 14, un dispositif de guidage (70) étant utilisé temporairement lors de l'insertion de l'aimant permanent (30), lequel forme un guide pour l'aimant permanent (30), en particulier le guide formé par le dispositif de guidage (70) étant espacé radialement vers l'intérieur de la butée (45), de sorte que l'aimant permanent (30) n'est pressé contre la butée (45) que lors du retrait du dispositif de guidage (70).
